# EUROPEAN PATENT SPECIFICATION

(11) **EP 4 351 078 B1**
(45) Date of publication and mention of the grant of the patent: **06.08.2025**
(21) Application number: 21946333.8
(22) Date of filing: 22.06.2021
(51) Int. Cl.: G06F 21/75, H04L 9/16, G09C 1/00

(54) **DATA PROCESSING METHOD AND PROCESSOR**
DATENVERARBEITUNGSVERFAHREN UND PROZESSOR
PROCÉDÉ DE TRAITEMENT DE DONNÉES ET PROCESSEUR

(43) Date of publication of application: 10.04.2024
(73) Proprietor: Huawei Technologies Co., Ltd., Shenzhen, Guangdong 518129 (CN)
(72) Inventor: GONG, Junfeng, Shenzhen, Guangdong 518129 (CN)
(74) Representative: Epping - Hermann - Fischer
(86) International application number: PCT/CN2021/101450
(87) International publication number: WO 2022/266831

(56) References cited:
- WO-A1-2015/128933
- WO-A1-2022/017103
- CN-A- 106 789 006
- CN-Y- 2 754 136
- US-A1- 2003 118 185
- US-A1- 2008 140 739
- US-A1- 2010 278 338

## Description

### TECHNICAL FIELD

Embodiments of this application relate to the field of electronic technologies, and in particular, to a data processing method and a processor.

### BACKGROUND

With the continuous development of computers, communication technologies, and Internet technologies, people can transmit data through a network. This greatly improves convenience of work and life. To ensure data security, one party may generally encrypt data by using an encryption algorithm, and then send encrypted data to the other party; and then the other party decrypts the received encrypted data.

Because an encryption algorithm has a huge computation amount, if a CPU (Central Processing Unitt) is used to perform an encryption operation, the CPU is occupied for a long time and cannot be released. Therefore, the encryption algorithm may be fixed, that is, a hardware module is used to implement the encryption algorithm, and then a device uses the fixed encryption algorithm to perform an encryption operation, to release CPU resources.

Currently, the fixed encryption algorithm cannot be updated. When a device needs to use an encryption algorithm whose type or security level is different from that of the current encryption algorithm, the new encryption algorithm also needs to be fixed. In other words, a conventional fixed encryption algorithm has poor scalability of a security level and the encryption algorithm has poor compatibility, and cannot meet a requirement of the device for a security level and an encryption algorithm type.

Prior art document US2008/140739-A1 discloses a cryptography processor including a central processing unit and a co-processor, the co-processor comprising a plurality of calculating subunits as well as a single control unit which is coupled to each of the plurality of calculating subunits. A cryptographic operation is distributed among the individual calculating subunits in the form of sub-operations by the control unit. The central processing unit, the plurality of calculating subunits and the control unit are integrated on a single chip, the chip comprising a common supply current access for supplying the plurality of calculating subunits and the control unit with current. Due to the arrangement of the calculating subunit in parallel, on the hand, the throughput of the cryptography processor is increased. On the other hand, however, the current profile that may be detected at the supply current access is randomised to such an extent that an attacker can no longer infer numbers processed in the individual calculating subunits.

### SUMMARY

To resolve the foregoing technical problem, this application provides a data processing method and a processor, to extend a security level and be compatible with a plurality of types of encryption algorithms based on a fixed encryption algorithm. This meets a requirement of a device for an encryption algorithm type and an encryption algorithm security level.

According to a first aspect, an embodiment of this application provides a processor. The processor includes: a data storage module, an instruction storage module, an instruction parsing module, and a plurality of arithmetic logic modules, where one arithmetic logic module includes at least one arithmetic logic unit, and one arithmetic logic unit is configured to implement an operation of one security level, where the data storage module is configured to store operation data and an operation result of an encryption algorithm; the instruction storage module is configured to store an operation instruction set of the encryption algorithm; the instruction parsing module is configured to: read an operation instruction from the operation instruction set stored in the instruction storage module, and parse the operation instruction to obtain parsing information, where the parsing information includes module information, security level information, and address information; and send, based on the parsing information, corresponding control information to an arithmetic logic module that matches the module information; and the arithmetic logic module is configured to: invoke, based on the control information, an arithmetic logic unit that matches the security level information, perform an operation by using operation data that matches the address information, to obtain an operation result corresponding to the operation instruction, and store the operation result in the data storage module. In this way, when a device needs to use different types of encryption algorithms or encryption algorithms of different security levels, an operation instruction set is configured based on a requirement, or an arithmetic logical unit is configured based on a required security level. In this way, extension of security levels and compatibility of a plurality of encryption algorithms can be implemented based on a fixed encryption algorithm. There is no need to fix a new encryption algorithm, and this improves scalability for security levels and compatibility for encryption algorithm types. This meets the requirement for an encryption algorithm type and the requirement for an encryption algorithm security level of the device.

For example, in embodiments of this application, the processor may be a coprocessor, and may be configured to assist a central processing unit (CPU) in implementing an encryption operation.

For example, in embodiments of this application, the address information may include a first storage address of the operation data in the processor, and instructs the parsing module or the arithmetic logic module to obtain the operation data from the data storage module based on the first storage address.

For example, in embodiments of this application, the address information may further include a second storage address of the operation result in the processor, and is used by the instruction parsing module or the arithmetic logic module to store, based on the second storage address, the operation result corresponding to the operation instruction in the data storage module.

For example, in embodiments of this application, the parsing information may further include a task identifier that is used by the processor to determine a corresponding external storage address when the processor actively reads the operation data from a memory outside the processor, and determine a corresponding external storage address when the operation result in the data storage module is written into the memory outside the processor.

For example, in embodiments of this application, an instruction memory may be a FIFO memory. Because a FIFO memory is a readable and writable memory, when the device needs to use another type of encryption algorithm, an operation instruction set of the another type of encryption algorithm may be generated. Then, the operation instruction set is written into the FIFO, so that a type of an encryption algorithm in the device is configurable, and a plurality of encryption algorithms can be compatible, thereby improving use flexibility.

For example, in embodiments of this application, an instruction memory may be a ROM. Because the ROM is a read-only memory, when the device is attacked, an operation instruction in the ROM cannot be changed, thereby improving algorithm security. In addition, a process of transferring the operation instruction set of the encryption algorithm to the instruction storage module before the encryption operation is performed may alternatively be omitted, to improve efficiency of the encryption operation.

According to any one of the first aspect or the foregoing implementations of the first aspect, the instruction parsing module is configured to: read, according to an arrangement sequence of the operation instructions in the operation instruction set, an operation instruction from the operation instruction set stored in the instruction storage module; and after an operation result corresponding to the operation instruction is stored in the data storage module, read, according to the arrangement sequence of the operation instructions in the operation instruction set, a next operation instruction from the operation instruction set stored in the instruction storage module. In this way, the instruction parsing module may read one operation instruction from the operation instruction set each time, and after the operation result of the operation instruction is obtained and the operation result is stored in the data storage module, read the next operation instruction from the operation instruction set, and then an operation result of the operation instruction is obtained and stored in the data storage module. This process is repeated until an operation result of the last operation instruction in the operation instruction set is obtained, that is, an encryption operation may be completed.

According to the first aspect or any one of the foregoing implementations of the first aspect, the instruction parsing module is configured to: generate a pulse signal based on the module information, and send the pulse signal to an arithmetic logic module that matches the module information; generate a level signal based on the security level information, and send the level signal to the arithmetic logic module that matches the module information; and generate the control data based on the address information, and send the control data to the arithmetic logic module that matches the module information. In this way, the instruction parsing module may control an arithmetic logic unit corresponding to the security level information in the corresponding arithmetic logic module to perform an operation. According to any one of the first aspect or the foregoing implementations of the first aspect, the instruction parsing module is configured to use the address information as the control data. In this way, the instruction parsing module may send the address information to the arithmetic logic module.

According to the first aspect or any one of the foregoing implementations of the first aspect, the arithmetic logic module is configured to: start, based on the level signal, an arithmetic logic unit that matches the security level information; and read, based on the first storage address information, the matched operation data from the data storage module, and input the operation data into the arithmetic logic unit that matches the security level information; the arithmetic logic unit is configured to: perform an operation based on the operation data to obtain an operation result corresponding to the operation instruction, and output the operation result to the arithmetic logic module that matches the module information; and the arithmetic logic module is configured to store the operation result in the data storage module based on the second storage address information. In this way, the arithmetic logic module obtains the operation data from the data storage module, and the arithmetic logic module stores the operation result in the data storage module.

According to the first aspect or any one of the foregoing implementations of the first aspect, the instruction parsing module is configured to: obtain, based on the first storage address information, the corresponding operation data from the data storage module; and generate the control data based on the obtained operation data. In this way, the instruction parsing module obtains the operation data, and sends the operation data to the arithmetic logic module.

According to the first aspect or any one of the foregoing implementations of the first aspect, the arithmetic logic module is configured to: start, based on the level signal, an arithmetic logic unit that matches the security level information, and input the control data into the arithmetic logic unit that matches the security level information; the arithmetic logic unit is configured to: perform an operation based on the control data to obtain an operation result corresponding to the operation instruction, and output the operation result to the arithmetic logic module that matches the module information; the arithmetic logic module is configured to send the operation result to the instruction parsing module; and the instruction parsing module is configured to store the operation result in the data storage module based on the second storage address information. In this way, the instruction parsing module stores the operation result in the data storage module.

According to any one of the first aspect or the foregoing implementations of the first aspect, the security level includes a level without an attack defense capability and a level with an attack defense capability. In this way, in a scenario in which security protection does not need to be performed, an arithmetic logic unit configured to implement a security level without an attack defense capability may be selected for operation. This can improve operation efficiency, and can save operation resources. In a scenario in which security protection needs to be performed, an arithmetic logic unit configured to implement a security level with an attack defense capability may be selected for operation, to ensure device security.

According to the first aspect or any one of the foregoing implementations of the first aspect, a security level with an attack defense capability is used to defend against at least one type of attack. In this way, when the arithmetic logic module configured to implement the security level with an attack defense capability is used to perform an operation, at least one type of attack can be prevented.

According to any one of the first aspect or the foregoing implementations of the first aspect, security levels implemented by different arithmetic logic units in an arithmetic logic module are different. In this way, the fixed encryption algorithm can defend against a plurality of types of attacks.

According to any one of the first aspect or the foregoing implementations of the first aspect, security levels implemented by arithmetic logic units in different arithmetic logic modules are different or the same. In this way, operations that have different security feature requirements in the encryption algorithm may be implemented by using algorithm logic units of different security levels, so that requirements in aspects such as security, resources, power consumption, and an area can be balanced.

According to a second aspect, an embodiment of this application provides a data processing method. The method is applied to processing, and the processor includes: a data storage module, an instruction storage module, an instruction parsing module, and a plurality of arithmetic logic modules, where the data storage module stores operation data of an encryption algorithm; the instruction storage module stores an operation instruction set of the encryption algorithm, one arithmetic logic module includes at least one arithmetic logic unit, and one arithmetic logic unit is configured to implement an operation of one security level; and the method includes: The instruction parsing module reads an operation instruction from the operation instruction set stored in the instruction storage module, and parses the operation instruction to obtain parsing information, where the parsing information includes module information, security level information, and address information; and the instruction parsing module sends, based on the parsing information, corresponding control information to an arithmetic logic module that matches the module information; and the arithmetic logic module that matches the module information invokes, based on the control information, an arithmetic logic unit that matches the security level information, performs an operation by using operation data that matches the address information, to obtain an operation result corresponding to the operation instruction, and stores the operation result in the data storage module.

According to the second aspect, the operation instruction set includes a plurality of operation instructions, and the operation instructions are arranged in the operation instruction set according to an operation sequence of a plurality of operations corresponding to the encryption algorithm; and that the instruction parsing module reads an operation instruction from the operation instruction set stored in the instruction storage module includes: The instruction parsing module reads, according to an arrangement sequence of the operation instructions in the operation instruction set, an operation instruction from the operation instruction set stored in the instruction storage module; and after an operation result corresponding to the operation instruction is stored in the data storage module, the instruction parsing module reads, according to the arrangement sequence of the operation instructions in the operation instruction set, a next operation instruction from the operation instruction set stored in the instruction storage module.

According to the second aspect or any one of the foregoing implementations of the second aspect, the control information includes a pulse signal, a level signal, and control data. That the instruction parsing module sends, based on the parsing information, corresponding control information to an arithmetic logic module that matches the module information includes: The instruction parsing module generates the pulse signal based on the module information, and sends the pulse signal to the arithmetic logic module that matches the module information; the instruction parsing module generates the level signal based on the security level information, and sends the level signal to the arithmetic logic module that matches the module information; and the instruction parsing module generates the control data based on the address information, and sends the control data to the arithmetic logic module that matches the module information.

According to the second aspect or any one of the foregoing implementations of the second aspect, that the instruction parsing module generates the control data based on the address information includes: The instruction parsing module uses the address information as the control data.

According to the second aspect or any one of the foregoing implementations of the second aspect, the address information includes first storage address information of the operation data, and that the instruction parsing module generates the control data based on the address information includes: The instruction parsing module obtains, based on the first storage address information, the corresponding operation data from the data storage module; and generates the control data based on the obtained operation data.

According to the second aspect or any one of the foregoing implementations of the second aspect, the address information includes first storage address information of the operation data and second storage address information of the operation result, that the arithmetic logic module that matches the module information invokes, based on the control information, an arithmetic logic unit that matches the security level information, performs an operation by using operation data that matches the address information, to obtain an operation result corresponding to the operation instruction, and stores the operation result in the data storage module includes: The arithmetic logic module that matches the module information starts, based on the level signal, an arithmetic logic unit that matches the security level information; and reads, based on the first storage address information, the matched operation data from the data storage module, and inputs the operation data into the arithmetic logic unit that matches the security level information. The arithmetic logic unit that matches the security level information performs an operation based on the operation data to obtain an operation result corresponding to the operation instruction, and outputs the operation result to the arithmetic logic module that matches the module information. The arithmetic logic module that matches the module information stores the operation result in the data storage module based on the second storage address information. According to the second aspect or any one of the foregoing implementations of the second aspect, the address information further includes second storage address information of an operation result. That the arithmetic logic module that matches the module information invokes, based on the control information, an arithmetic logic unit that matches the security level information, performs an operation by using operation data that matches the address information, to obtain an operation result corresponding to the operation instruction, and stores the operation result in the data storage module includes: The arithmetic logic module that matches the module information starts, based on the level signal, an arithmetic logic unit that matches the security level information, and inputs the control data into the arithmetic logic unit that matches the security level information. The arithmetic logic unit that matches the security level information performs an operation based on the control data to obtain an operation result corresponding to the operation instruction, and outputs the operation result to the arithmetic logic module that matches the module information. The arithmetic logic module that matches the module information sends the operation result to the instruction parsing module. The instruction parsing module stores the operation result in the data storage module based on the second storage address information.

According to the second aspect or any one of the foregoing implementations of the second aspect, the security level includes: a level without an attack defense capability and a level with an attack defense capability; and one security level with an attack defense capability is used to defend against at least one type of attack.

According to the second aspect or any one of the foregoing implementations of the second aspect, different arithmetic logic units in an arithmetic logic module implement different security levels; and security levels implemented by arithmetic logic units in different arithmetic logic modules are different or the same.

The second aspect and any implementation of the second aspect respectively correspond to the first aspect and any implementation of the first aspect. For technical effects corresponding to the second aspect and any implementation of the second aspect, refer to the technical effects corresponding to the first aspect and any implementation of the first aspect. Details are not described herein again.

According to a third aspect, an embodiment of this application provides a chip. The chip includes at least one processor and an interface, and optionally further includes a memory. The at least one processor is configured to invoke instructions stored in the memory, to perform steps of the data processing method in any one of the second aspect or the implementations of the second aspect.

The third aspect and any implementation of the third aspect respectively correspond to the first aspect and any implementation of the first aspect. For technical effects corresponding to the third aspect and any implementation of the third aspect, refer to the technical effects corresponding to the first aspect and any implementation of the first aspect. Details are not described herein again.

According to a fourth aspect, an embodiment of this application discloses a computer-readable storage medium. The computer-readable storage medium stores a computer program. When the computer program is run on a computer or a processor, the computer or the processor performs the method in any one of the second aspect or the possible implementations of the second aspect.

The fourth aspect and any implementation of the fourth aspect respectively correspond to the first aspect and any implementation of the first aspect. For technical effects corresponding to the fourth aspect and any implementation of the fourth aspect, refer to the technical effects corresponding to the first aspect and any implementation of the first aspect. Details are not described herein again.

According to a fifth aspect, an embodiment of this application provides a computer program product. The computer program product includes a software program, and when the software program is executed by a computer or a processor, the method in any one of the second aspect or the possible implementations of the second aspect is performed.

The fifth aspect and any implementation of the fifth aspect respectively correspond to the first aspect and any implementation of the first aspect. For technical effects corresponding to the fifth aspect and any implementation of the sixth aspect, refer to the technical effects corresponding to the first aspect and any implementation of the first aspect. Details are not described herein again.

### BRIEF DESCRIPTION OF DRAWINGS

FIG. 1 is a schematic diagram of a structure of a processor according to an embodiment of this application;
FIG. 2 is a schematic diagram of a structure of an arithmetic logic module according to an embodiment of this application;
FIG. 3 is a schematic diagram of a structure of an arithmetic logic module according to an embodiment of this application;
FIG. 4 is a schematic diagram of a structure of an arithmetic logic module according to an embodiment of this application;
FIG. 5 is a schematic diagram of an asymmetric encryption process;
FIG. 6 is a schematic flowchart of a data processing method according to an embodiment of this application;
FIG. 7 is a schematic diagram of a structure of a processor according to an embodiment of this application;
FIG. 8 is a schematic diagram of a process of a data processing method according to an embodiment of this application;
FIG. 9 is a schematic diagram of a process of a data processing method according to an embodiment of this application;
FIG. 10 is a schematic diagram of a structure of an example apparatus; and
FIG. 11 is a schematic diagram of a structure of an example chip.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship between associated objects and indicates that three relationships may exist. For example, A and/or B may represent the following cases: Only A exists, both A and B exist, and only B exists.

In the specification and claims in embodiments of this application, the terms "first", "second", and so on are intended to distinguish between different objects but do not indicate a particular order of the objects. For example, a first target object, and a second target object are used to distinguish between different target objects, but are not used to describe a particular order of the target objects.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In the description of the embodiment of this application, unless otherwise stated, "multiple" means two or more than two. For example, a plurality of processing units means two or more processing units; and a plurality of systems mean two or more systems.

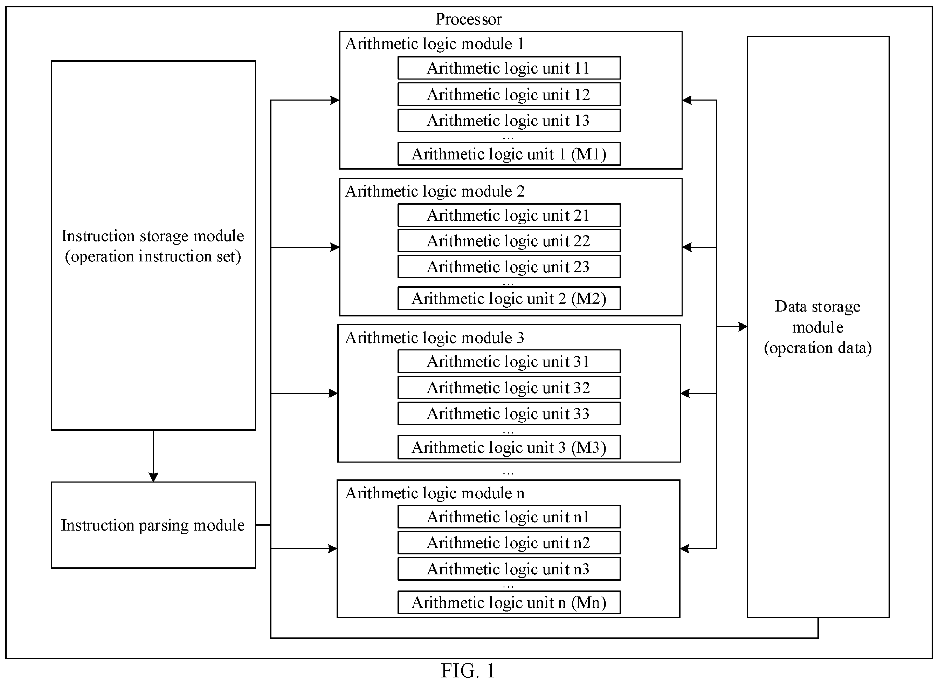

For example, FIG. 1 is a schematic diagram of a structure of a processor according to an embodiment of this application. It should be understood that the processor shown in FIG. 1 is merely an example of the processor, and the processor may have more or fewer components than those shown in the figure, two or more components may be combined, or there may be different component configurations.

The processor may include: a data storage module, an instruction storage module, an instruction parsing module, a plurality of arithmetic logic modules, and the like.

The processor may be configured to assist a CPU in processing a specific task, and may be a coprocessor. In this embodiment of this application, the specific task may be an encryption operation, that is, the processor in this embodiment of this application may be configured to assist the CPU in processing the encryption operation.

The data storage module may be configured to store data. For example, the data storage module may be a RAM (Random Access Memory, random access memory). In this embodiment of this application, the data storage module may be configured to store operation data and an operation result of an encryption algorithm.

The instruction storage module may be configured to store instructions. For example, the instruction storage module may be a ROM (Read-Only Memory, read-only memory), a FIFO (First Input First Output, first input first output) memory, or the like. In this embodiment of this application, the instruction storage module may be configured to store an operation instruction set of the encryption algorithm.

The instruction parsing module may be configured to parse the instructions and control the arithmetic logic module to perform an operation. In this embodiment of this application, the instruction parsing module may read and parse the instructions from the instruction storage module, and then control, based on a parsing result, the arithmetic logic module to perform an operation, to implement an encryption operation.

For example, the processor may include n arithmetic logic modules (n is a positive integer, and a specific value may be configured based on a requirement). The arithmetic logic modules may be configured to perform operations, and operations corresponding to the arithmetic logic modules may be different. In other words, in this embodiment of this application, the n arithmetic logic modules may implement n different operations. For example, as shown in FIG. 1, an arithmetic logic module 1 may be configured to perform a modular addition operation, an arithmetic logic module 2 may be configured to perform a large number multiplication operation, and an arithmetic logic module 3 may be configured to perform a logical AND operation, and the like. In this embodiment of this application, an example of an operation corresponding to each arithmetic logic module is provided. The operation may be set based on an actual requirement. This is not limited in this embodiment of this application.

An arithmetic logic unit may include one or more logic circuits of a combinatorial logic circuit (for example, a NAND gate circuit), a sequential logic circuit (for example, a register), and a hardware logic circuit (for example, an adder). The arithmetic logic unit belongs to an arithmetic logic module, and may be configured to implement an operation of the arithmetic logic module. Each arithmetic logic module may include at least one arithmetic logic unit, and quantities of arithmetic logic units included in the arithmetic logic modules may be the same or may be different. Specifically, configuration may be performed based on a requirement. This is not limited in this embodiment of this application. For example, M1, M2, M3, ..., and Mn are respectively quantities of arithmetic logic units included in the arithmetic logic module 1, the arithmetic logic module 2, the arithmetic logic module 3, ..., and an arithmetic logic module n. M1, M2, M3, ..., and Mn are all positive integers, and specific values may be configured based on a requirement. This is not limited in this embodiment of this application.

For example, an arithmetic logic unit in any arithmetic logic module may be configured to implement an operation of a security level. The security level may be used to represent a capability of defending against an attack (for example, a side channel attack). The security level may include a level with an attack defense capability, or may include a level without an attack defense capability. Optionally, for a level with an attack defense capability, at least one type of attack can be defended against, and different security levels may correspond to different attack defense types. The attack may include a side-channel attack, for example, obtaining ciphertext information by using various leakage information generated during running of encrypted software or hardware, such as a power consumption attack, a fault injection attack, and the like.

In some examples, security levels may be classified into a security level 0, a security level 1, a security level 2, a security level 3, ..., and a security level L. The security level 0 may be used to represent that there is no attack defense capability, that is, an attack cannot be defended. The security level 1, the security level 2, the security level 3, ..., and the security level L may be used to represent that there is an attack defense capability, and the security level 1, the security level 2, the security level 3, ..., and the security level L may separately correspond to defense against at least one type of attack.

When the arithmetic logic module includes a plurality of arithmetic logic units, the plurality of arithmetic logic units may be configured to implement operations of different security levels, and operations implemented by the plurality of arithmetic logic units are the same. In other words, a plurality of arithmetic logic units in an arithmetic logic module are different logic circuits that implement a same operation.

For example, FIG. 1 shows that the arithmetic logic module 1 includes M1 arithmetic logic units: an arithmetic logic unit 11, an arithmetic logic unit 12, an arithmetic logic unit 13, ..., and an arithmetic logic unit 1 (M1). If the arithmetic logic module 1 is configured to implement a modular addition operation, the arithmetic logic unit 11, the arithmetic logic unit 12, the arithmetic logic unit 13, ..., and the arithmetic logic unit 1 (M1) are M1 different logic circuits that can implement modular addition, and the M1 arithmetic logic units correspond to different M1 security levels.

The following uses the arithmetic logic module 1 used for modular addition as an example to describe a process of implementing modular addition by using three arithmetic logic units (the arithmetic logic unit 11, the arithmetic logic unit 12, and the arithmetic logic unit 13) of different security levels.

Modular addition is ((A+B) mod P), where A and B are operation data stored in the data storage module, and P is a finite field corresponding to the modular addition operation. Finite fields of different encryption algorithms may be different.

It is assumed that the arithmetic logic unit 11 corresponds to the security level 0, the arithmetic logic unit 12 corresponds to the security level 1, and the arithmetic logic unit 13 corresponds to the security level 2. The security level 0 indicates that there is no attack defense capability, that is, an attack of any type cannot be defended against. The security level 1 indicates defense against a differential power consumption attack. The security level 2 indicates defense against a fault injection attack.

A process of implementing modular addition by the arithmetic logic unit 11 may be as follows:
Input: A, B, and P.
Operation process: Calculate C1 = A + B and calculate C2 = (A + B - P).
Output: If C2 is a negative number, C1 is used as output; or if C2 is 0 or a positive number, C2 is used as output. For example, A = 5, B = 6, and P = 7.
Input: 5, 6, and 7.
Operation process: Calculate C1 = 5 + 6 = 11 and C2 = 5 + 6 - 7 = 4.
Output: 4.
For another example, A=2, B=3, and P=7.
Input: 2, 3, and 7.
Operation process: Calculate C1 = 2 + 3 = 5 and C2 = 2 + 3 - 7 = -2.
Output: 5.

A process of implementing modular addition by the arithmetic logic unit 12 is as follows:
Input: A, B, and P.
Operation process: A pseudo random number generator generates a random number R. Calculate C1 = (A + R) + (B - R), and calculate C2 = (A + R) + (B - R - P).
Output: If C2 is a negative number, C1 is used as output; or if C2 is 0 or a positive number, C2 is used as output.

When there is no attack defense capability, information (such as power consumption and electromagnetic information) released by the arithmetic logic module to the outside each time is fixed. Therefore, ciphertext information can be obtained by a differential power consumption attack. Further, the arithmetic logic unit 12 adds some random numbers in an operation process, so that information released by the arithmetic logic module to the outside each time is different, and information such as power consumption and electromagnetic information released by the arithmetic logic module to the outside may be interfered, to implement defense against a differential power consumption attack.

For example, A = 5, B = 6, and P = 7.

Input: 5, 6, and 7.

Operation process: Generate a random number 2, calculate C1 = (5 + 2) + (6 - 2) = 11, and calculate C2 = (5 + 2) +

(6 - 2 - 7) = 4.

Output: 4.

For another example, A=2, B=3, and P=7.

Input: 2, 3, and 7.

Operation process: Generate a random number 4, calculate C1 = (2 + 4) + (3 - 4) = 5, and calculate C2 = (2 + 4) + (3 - 4 - 7) = - 2.

Output: 5.

A process of implementing modular addition by the arithmetic logic unit 13 is as follows: Input: A, B, and P.

Operation process: Calculate C1 = A + B, C2 = (A + B - P), C3 = A + B, and C4 = (A + B - P).

Output: When C1 = C3 and C2 = C4, when (A + B - P) is a negative number, C1 is used as output; and when (A + B - P) is not a negative number, C2 is used as output. If C1 is not equal to C3, or C2 is not equal to C4, 0 is used as output.

The arithmetic logic unit 13 performs two same calculations, and compares results of the two calculations, to check an operation process. A comparison result is used to determine whether a fault injection attack, such as a laser attack or an active attack, occurs, thereby preventing the fault injection attack.

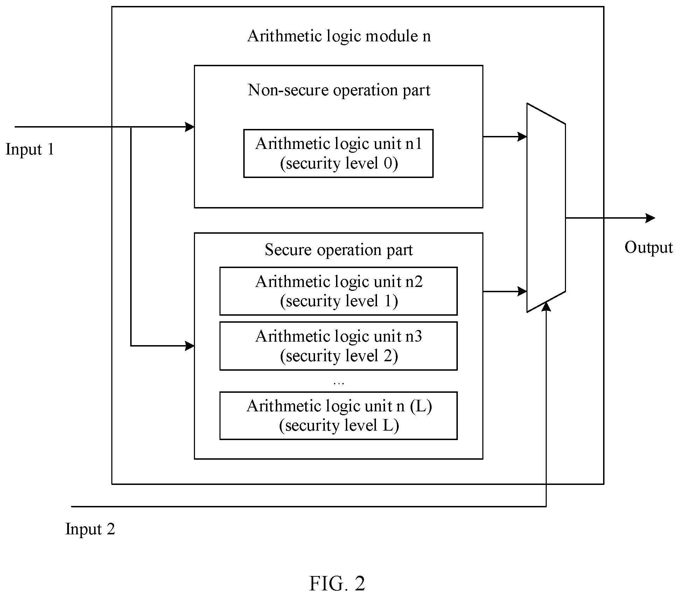

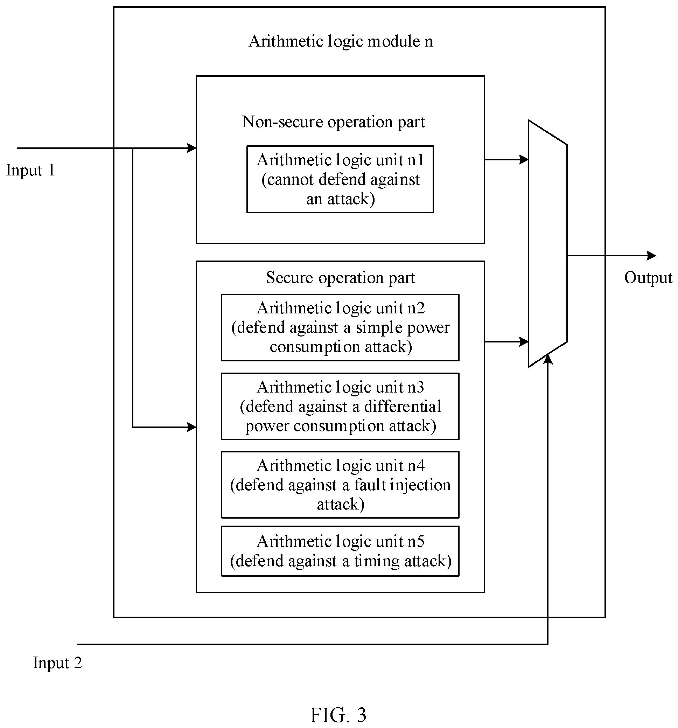

In some examples, the arithmetic logic module may include two logical parts: a non-secure operation part and a secure operation part. Refer to FIG. 2. In FIG. 2, input 1 is operation data, input 2 is security level information, and output is an operation result of arithmetic logic units. The non-secure operation part may include an arithmetic logic unit, and the arithmetic logic unit corresponds to the security level 0. The secure operation part may include at least one arithmetic logic unit, and each arithmetic logic unit in the secure operation part may correspond to any one of the security levels 1 to L. Therefore, in a scenario in which security protection does not need to be performed, an arithmetic logic unit in the non-secure operation part may be selected to perform an operation, thereby improving operation efficiency and saving operation resources. However, in a scenario in which security protection needs to be performed, an arithmetic logic unit in the security part may be selected to perform an operation, to ensure device security. Optionally, a corresponding attack type to be defended may be separately set for another security level other than the security level 0. In some examples, for another security level other than the security level 0, one type of attack may be set for each security level. Based on FIG. 2, with reference to FIG. 3, an arithmetic logic unit n1 in FIG. 3 corresponds to a security level 0, and cannot defend against an attack. An arithmetic logic unit n2 corresponds to a security level 1, and can defend against a simple power consumption attack. An arithmetic logic unit n3 corresponds to a security level 2, and can defend against a differential power consumption attack. An arithmetic logic unit n4 corresponds to a security level 3, and can defend against a fault injection attack. An arithmetic logic unit n5 corresponds to a security level 4, and can defend against a timing attack.

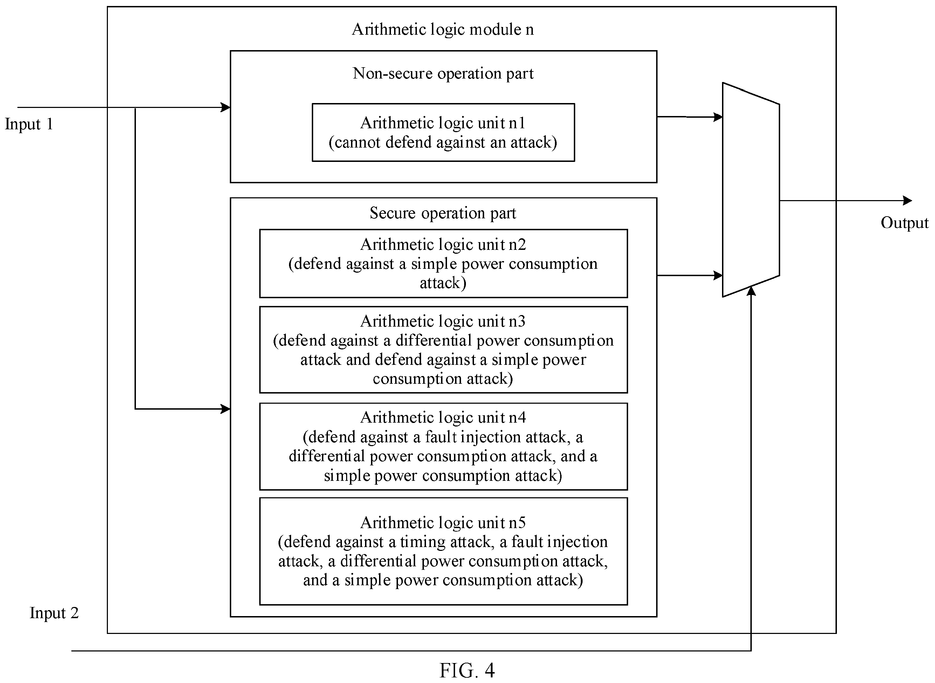

In some examples, at least one type of attack to be defended may be set for each security level other than the security level 0. Based on FIG. 2, with reference to FIG. 4, an arithmetic logic unit n1 in FIG. 4 corresponds to a security level 0, and cannot defend against an attack. An arithmetic logic unit n2 corresponds to a security level 1, and can defend against a simple power consumption attack. An arithmetic logic unit n3 corresponds to a security level 2, and can defend against a differential power consumption attack and a simple attack. An arithmetic logic unit n4 corresponds to a security level 3, and can defend against a fault injection attack, a simple power consumption attack, and a differential power consumption attack. An arithmetic logic unit n5 corresponds to a security level 4, and can defend against a timing attack, a fault injection attack, a simple power consumption attack, and a differential power consumption attack.

It should be noted that FIG. 3 and FIG. 4 show only examples of attack defense types corresponding to security levels. The attack defense type corresponding to each security level may be configured based on a requirement. This is not limited in this embodiment of this application.

In some examples, a higher security level indicates a corresponding stronger attack defense capability. As shown in FIG. 4, defense capability of an arithmetic logic unit n5 > defense capability of an arithmetic logic unit n4 > defense capability of an arithmetic logic unit n3 > defense capability of an arithmetic logic unit n2 > defense capability of an arithmetic logic unit n1.

In some examples, in an arithmetic logic module, a complexity degree of a logic circuit corresponding to an arithmetic logic unit with a high security level may be greater than a complexity degree of a logic circuit corresponding to an arithmetic logic unit with a low security level. For example, in FIG. 4, complexity degree of a logic circuit of the arithmetic logic unit n5 > complexity degree of a logic circuit of the arithmetic logic unit n4 > complexity degree of a logic circuit of the arithmetic logic unit n3 > complexity degree of a logic circuit of the arithmetic logic unit n2 > complexity degree of a logic circuit of the arithmetic logic unit n1.

In this embodiment of this application, an encryption algorithm that needs to be used by a device may be determined. Then, the device may respond to an operation performed by an algorithm designer on the device, analyze and process an encryption algorithm that needs to be used by the device, and convert all operations included in an encryption algorithm into corresponding operation instructions, to obtain a corresponding operation instruction set, and determine operation data required when the device executes an encryption operation corresponding to the encryption algorithm. The device may need to use one or more encryption algorithms. When the device needs to use a plurality of encryption algorithms, the device may separately generate an operation instruction set corresponding to each encryption algorithm, and may determine corresponding operation data required by each encryption algorithm.

In some examples, the encryption algorithm may include a plurality of operations. Correspondingly, in response to an operation performed by an algorithm designer on a device, the device may respectively convert the plurality of operations included in the encryption algorithm into a plurality of corresponding operation instructions. Then, the device may further determine an operation sequence of the operations in the encryption algorithm in response to an operation performed by the algorithm designer on the device based on a mathematical principle model corresponding to the encryption algorithm. Then, the corresponding operation instructions are arranged according to the operation sequence of the operations, to obtain a corresponding operation instruction set. That is, the operation instructions in the operation instruction set are sequential.

After the device responds to an operation of the algorithm designer to generate the operation instruction set and determine the operation data, the device may store the operation instruction set and the operation data in a memory (located outside a processor) of the device. Then, when the device needs to perform an operation by using the encryption algorithm, the device may respectively store the operation instruction set in an instruction storage module of the processor, and may store the operation data in a data storage module of the processor.

In some examples, a CPU or DMA (Direct Memory Access, direct memory access) may store the operation instruction set from a memory of the device to the instruction storage module of the processor, and store the operation data in a data storage module of co-processing.

In some examples, the processor may actively read the operation instruction set from the memory of the device and write the operation instruction set into the instruction storage module, and actively read the operation data and write the operation data into the data storage module. The CPU may generate a read instruction and send the read instruction to the processor. After receiving the read instruction, the processor may read the operation instruction set from the memory of the device and write the operation instruction set into the instruction storage module, and read the operation data and write the operation data into the data storage module. After the operation instruction set is successfully stored in the instruction storage module, and the operation data of the encryption algorithm is successfully stored in the data storage module, the processor may return a corresponding response message to the CPU, to notify the CPU that the operation instruction set and the operation data are successfully written into the corresponding storage modules.

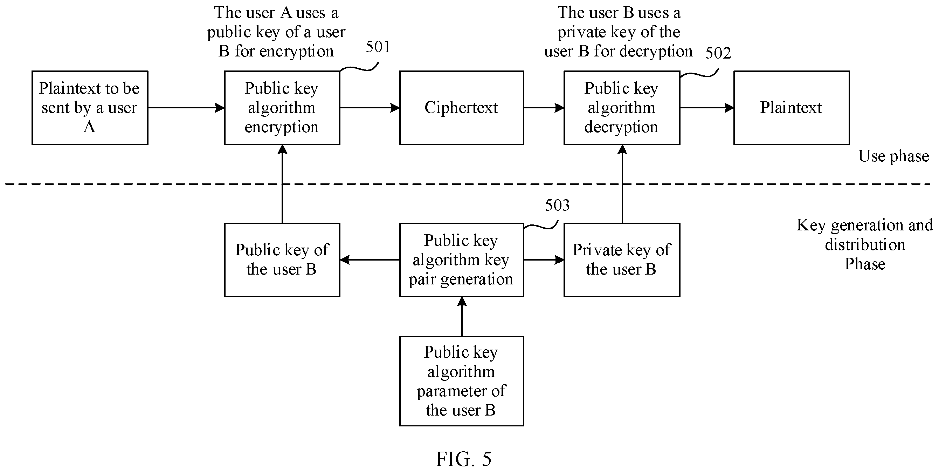

It should be noted that, in this embodiment of this application, the encryption algorithm may include a plurality of types, for example, a symmetric encryption algorithm, a hash algorithm, and an asymmetric encryption algorithm (which may also be referred to as a public key algorithm). Each encryption algorithm may include an algorithm used in a plurality of encryption-related processes, for example, may include an algorithm used for key generation, an algorithm used for data encryption, and an algorithm used for data decryption. Correspondingly, the encryption operation may also include operations of a plurality of processes related to encryption, for example, an operation of a key generation process, an operation of a data encryption process, and an operation of a data decryption process. For example, refer to FIG. 5. FIG. 5 is a schematic diagram of an asymmetric encryption process. The following uses an example in which a user A sends encrypted data to a user B and the user B decrypts the encrypted data. Public key algorithm keys may be first generated based on a public key algorithm parameter of the user B, where the keys include a public key and a private key. Then, the user B publishes the public key to the user A and retains the private key. When the user A needs to send data to the user B, a public key algorithm may be used to encrypt, based on the public key of the user B, a plaintext of the data to be sent, to obtain a ciphertext, and send the ciphertext to the user B. After receiving the ciphertext sent by the user A, the user B may decrypt the ciphertext based on the private key of the user B by using a public key algorithm, to obtain a corresponding plaintext. Encryption algorithms may include algorithms used in 501, 502, and 503 in FIG. 5, and encryption operations may include operations corresponding to 501, 502, and 503.

After a CPU determines that an operation instruction set of an encryption algorithm is stored in an instruction storage module, and operation data of the encryption algorithm is stored in a data storage module, the CPU may generate a start signal (for example, a start signal). Then, the start signal is sent to a processor, to start the processor to perform an encryption operation. After receiving the start signal, the processor may perform a data processing method in an embodiment of this application, to perform the encryption operation, which may be as follows:

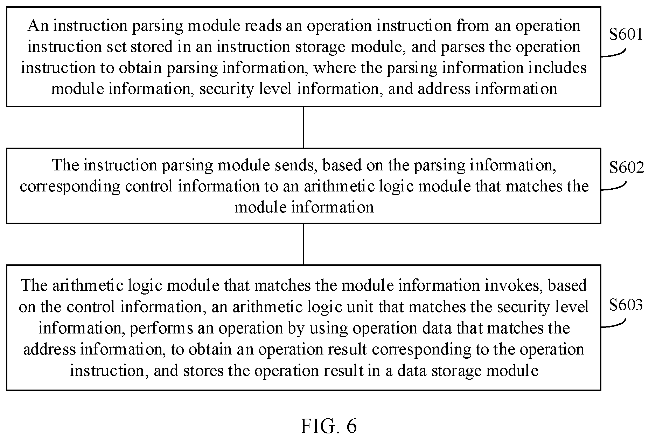

FIG. 6 is a schematic flowchart of a data processing method according to an embodiment of this application.

S601: An instruction parsing module reads an operation instruction from the operation instruction set stored in the instruction storage module, and parses the operation instruction to obtain parsing information, where the parsing information includes module information, security level information, and address information.

For example, the CPU may send the start signal to the instruction parsing module of the processor. After receiving the start signal, the instruction parsing module may read an operation instruction from the operation instruction set stored in the instruction storage module.

In some examples, a structure of the operation instruction in the operation instruction set may be shown in Table 1.

**Table 1**

| | | | | |
|---|---|---|---|---|
| dout_addr | din_addr1 | din_addr2 | sec_mode | cal_mode |

The dout_addr field indicates a storage address that is of an operation result corresponding to an operation instruction and that is in the data storage module.

The din_addr1 field indicates a storage address that is of a piece of operation data corresponding to the operation instruction and that is in the data storage module.

The din_addr2 field indicates a storage address that is of another piece of operation data corresponding to the operation instruction and that is in the data storage module.

The sec_mode field indicates a security level corresponding to the operation instruction.

The cal_mode field indicates an arithmetic logic module that executes an operation corresponding to the operation instruction.

For example, some operation instructions in an operation instruction set of an encryption algorithm are shown in Table 2:

**Table 2**

| out_addr | din_addr2 | din_addr1 | sec_mode | cal_mode |
|---|---|---|---|---|
| ADDR_R | ADDR_B | ADDR_A | 0 to L | 8'd5 |
| ADDR_R | ADDR_B | ADDR_A | 0 to L | 8'd6 |
| ADDR_R | ADDR_B | ADDR_B | 0 to L | 8'd7 |
| ADDR_R | ADDR_B | ADDR_A | 0 to L | 8'd8 |
| ADDR_R | ADDR_B | ADDR_A | 0 to L | 8'd9 |
| ADDR_R | ADDR_B | ADDR_A | 0 to L | 8'd10 |
| ADDR_R | ADDR_B | ADDR_A | 0 to L | 8'd11 |
| ADDR_R | ADDR_B | ADDR_A | 0 to L | 8'd12 |
| ADDR_R | ADDR_B | ADDR_A | 0 to L | 8'd13 |
| ADDR_R | ADDR_B | ADDR_A | 0 to L | 8'd14 |

In Table 2, 8'd5, 8'd6, 8'd7, 8'd8, 8'd9, 8'd10, 8'd11, 8'd12, 8'd13 and 8'd14 correspond to addresses of arithmetic logic modules. For example,
8'd5 is an address of an arithmetic logic module 85, and an operation corresponding to the arithmetic logic module 85 is modular addition: R = (A + B) mod P (P is a finite field of the modular addition operation);
8'd6 is an address of an arithmetic logic module 86, and an operation corresponding to the arithmetic logic module 86 is modular subtraction: R = (A - B) mod P (P is a finite field of the modular subtraction operation);
8'd7 is an address of an arithmetic logic module 87, and an operation corresponding to the arithmetic logic module 87 is modular square: R = (B * B) mod P (P is a finite field of the modular square operation);
8'd8 is an address of an arithmetic logic module 88, and an operation corresponding to the arithmetic logic module 88 is modular multiplication: R = (A * B) mod P (P is a finite field of the modular multiplication operation);
8'd9 is an address of an arithmetic logic module 89, and an operation corresponding to the arithmetic logic module 89 is modular inverse: R = A ^ (- 1) * 2 ^ Bmod P (P is a finite field of the modular inverse operation);
8'd10 is an address of an arithmetic logic module 810, and an operation corresponding to the arithmetic logic module 810 is modulo: R = A mod P (P is a finite field of the modulo operation);
8'd11 is an address of an arithmetic logic module 811, and an operation corresponding to the arithmetic logic module 811 is large-number multiplication: R = A * B;
8'd12 is an address of an arithmetic logic module 812, and an operation corresponding to the arithmetic logic module 812 is logical AND: R = A & B;
8'd13 is an address of an arithmetic logic module 813, and an operation corresponding to the arithmetic logic module 813 is logical OR: R = A | B; and
8'd14 is an address of an arithmetic logic module 814, and an operation corresponding to the arithmetic logic module 814 is logical exclusive OR: R = A ^ B.

An attribute value in the sec_mode field indicates that a security level corresponding to an operation instruction may be any security level selected from 0 to L, and may be configured as required.

For example, for an encryption algorithm with a high security requirement, in a process of generating an instruction set, sec_mode fields of all instructions may be configured to a mode with high security in the following manner. In this way, protection of a high security level can be obtained during an operation of an arithmetic logic unit. Refer to Table 3.

**Table 3**

| out_addr | din_addr2 | din_addr1 | sec_mode | cal_mode |
|---|---|---|---|---|
| ADDR_R | ADDR_B | ADDR_A | L | 8'd5 |
| ADDR_R | ADDR_B | ADDR_A | L | 8'd6 |
| ADDR_R | ADDR_B | ADDR_B | L | 8'd7 |
| ADDR_R | ADDR_B | ADDR_A | L | 8'd8 |
| ADDR_R | ADDR_B | ADDR_A | L | 8'd9 |
| ADDR_R | ADDR_B | ADDR_A | L | 8'd10 |
| ADDR_R | ADDR_B | ADDR_A | L | 8'd11 |
| ADDR_R | ADDR_B | ADDR_A | L | 8'd12 |
| ADDR_R | ADDR_B | ADDR_A | L | 8'd13 |
| ADDR_R | ADDR_B | ADDR_A | L | 8'd14 |

For example, if security feature requirements of some steps in an encryption algorithm are not high or there is no security feature requirement, a sec_mode field of an operation instruction corresponding to an encryption algorithm step may be configured as a corresponding security level. In this way, a balance may be achieved in terms of security, resources, power consumption, an area, and the like, to achieve optimized security implementation. Refer to Table 4.

**Table 4**

| out_addr | din_addr2 | din_addr1 | sec_mode | cal_mode |
|---|---|---|---|---|
| ADDR_R | ADDR_B | ADDR_A | L | 8'd5 |
| ADDR_R | ADDR_B | ADDR_A | 0 | 8'd6 |
| ADDR_R | ADDR_B | ADDR_B | 1 | 8'd7 |
| ADDR_R | ADDR_B | ADDR_A | 1 | 8'd8 |
| ADDR_R | ADDR_B | ADDR_A | L | 8'd9 |
| ADDR_R | ADDR_B | ADDR_A | L | 8'd10 |
| ADDR_R | ADDR_B | ADDR_A | L | 8'd11 |
| ADDR_R | ADDR_B | ADDR_A | 2 | 8'd12 |
| ADDR_R | ADDR_B | ADDR_A | 3 | 8'd13 |
| ADDR_R | ADDR_B | ADDR_A | L | 8'd14 |

For example, if there are many hardware implementation limitations on resources such as an area and power consumption, sec_mode fields of all operation instructions may be configured to 0, that is, an arithmetic logic unit implements an encryption algorithm with a pure function without any protection in an operation process. In this case, arithmetic logic units of an arithmetic logic module may alternatively be completely implemented based on a pure function, that is, one arithmetic logic module includes one arithmetic logic unit, and a security level corresponding to the arithmetic logic unit is 0. Refer to Table 5.

**Table 5**

| out_addr | din_addr2 | din_addr1 | sec_mode | cal_mode |
|---|---|---|---|---|
| ADDR_R | ADDR_B | ADDR_A | 0 | 8'd5 |
| ADDR_R | ADDR_B | ADDR_A | 0 | 8'd6 |
| ADDR_R | ADDR_B | ADDR_B | 0 | 8'd7 |
| ADDR_R | ADDR_B | ADDR_A | 0 | 8'd8 |
| ADDR_R | ADDR_B | ADDR_A | 0 | 8'd9 |
| ADDR_R | ADDR_B | ADDR_A | 0 | 8'd10 |
| ADDR_R | ADDR_B | ADDR_A | 0 | 8'd11 |
| ADDR_R | ADDR_B | ADDR_A | 0 | 8'd12 |
| ADDR_R | ADDR_B | ADDR_A | 0 | 8'd13 |
| ADDR_R | ADDR_B | ADDR_A | 0 | 8'd14 |

In some other examples, a structure of an operation instruction in the operation instruction set may be shown in Table 6.

**Table 6**

| | | | | | |
|---|---|---|---|---|---|
| dout_addr | din_addr1 | din_addr2 | sec_mode | cal_mode | ins_id |

The dout_addr field indicates a storage address that is of an operation result corresponding to an operation instruction and that is in the data storage module.

The din_addr1 field indicates a storage address that is of a piece of operation data corresponding to the operation instruction and that is in the data storage module.

The din_addr2 field indicates a storage address that is of another piece of operation data corresponding to the operation instruction and that is in the data storage module.

The sec_mode field indicates a security level corresponding to the operation instruction.

The cal_mode field indicates an arithmetic logic module that executes an operation corresponding to the operation instruction.

The ins_id field indicates a task identifier that is used by the processor to determine a corresponding external storage address when the processor actively reads the operation data from a memory outside the processor, and determine a corresponding external storage address when the operation result in the data storage module is written into the memory outside the processor.

When the processor actively reads the operation data from the memory outside the processor, the instruction parsing module of the processor may read an operation instruction from the instruction storage module and parse the operation instruction to obtain an attribute value corresponding to the ins_id field and attribute values of the din_addr1 field and the din_addr2 field. Then, the operation data may be read from the corresponding memory outside the processor based on the attribute value corresponding to the ins_id field, and the read operation data is written into the data storage module based on the attribute values of the din_addr1 field and the din_addr2 field.

In this embodiment of this application, one service may include a plurality of tasks, and each task may correspond to one encryption algorithm. Encryption algorithms used by different tasks may be the same or different. When one service includes a plurality of tasks, operation data corresponding to encryption algorithms used by the tasks may be different, that is, the operation data corresponding to the tasks may be stored at different addresses in the memory outside the processor. Optionally, a corresponding task identifier may be set for each task, where the task identifier may be used to uniquely identify the task; and corresponding storage addresses (namely, a storage address of operation data corresponding to the task in the memory outside the processor and a storage address of an operation result in the memory outside the processor) are mapped for each task identifier. When generating an operation instruction, the CPU configures the ins_id field based on a task identifier of a task to which the operation instruction belongs, so that when a service includes a plurality of tasks, attribute values corresponding to ins_id fields in the operation instructions may be different. If a service contains only one task, attribute values corresponding to ins_id fields in the operation instruction are the same. In this way, after obtaining the attribute value corresponding to the ins_id field through parsing, the instruction parsing module may map the attribute value to a storage address of operation data corresponding to the operation instruction in the memory outside the processor and read the operation data.

That is, if the CPU or the DMA actively writes operation data into the data storage module of the processor, and the CPU or the DMA actively reads an operation result from the data storage module, a structure of an operation instruction may be a structure shown in Table 1. If the processor actively reads operation data from the memory outside the processor, and actively writes an operation result into the memory outside the processor, a structure of an operation instruction may be a structure shown in Table 6.

It should be noted that, the foregoing examples of the operation instruction structures merely show that the operation instruction corresponds to two pieces of arithmetic data. However, a quantity of pieces of arithmetic data corresponding to the operation instruction is not limited in this embodiment of this application.

In addition, a structure of ab operation instruction may further include another type of field, and may be determined based on different types of encryption algorithms. This is not limited in this embodiment of this application.

For example, after reading an operation instruction, the instruction parsing module may parse the operation instruction based on attribute values corresponding to fields in the operation instruction, to obtain corresponding parsing information. Address information that is of an operation result corresponding to the operation instruction and that is in the data storage module may be determined based on an attribute value corresponding to the dout_addr field. Address information that is of operation data corresponding to the operation instruction and that is in the data storage module is determined based on the attribute values of the din_addr1 field and the din_addr2 field. In addition, which arithmetic logic module that executes an operation corresponding to the operation instruction may be determined based on an attribute value of the cal_mode field, to obtain corresponding module information. In addition, an arithmetic logic unit of which security level is implemented and that is in the arithmetic logic module to implement a corresponding operation is determined based on the attribute value corresponding to the sec_mode field, to obtain corresponding security level information.

For example, an operation instruction read by the instruction parsing module may be shown in Table 7.

**Table 7**

| | | | | |
|---|---|---|---|---|
| 0x30 | 0x20 | 0x10 | 0x0 | 0x01 |

The instruction parsing module parses the operation instruction, and may obtain module information 0x01, address information 0x30, 0x20, and 0x10, and security level information 0x0.

For ease of subsequent description, information used to represent a storage address that is of operation data corresponding to the operation instruction and that is in the data storage module may be referred to as first storage address information. Information used to represent a storage address that is of an operation result corresponding to the operation instruction and that is in the data storage module is referred to as second storage address information. In the foregoing example, the first storage address information is: 0x20 and 0x10, and the second storage address information is: 0x30.

In some embodiments of this application, the instruction parsing module may serially read an operation instruction from the operation instruction set, and serially execute an operation corresponding to the operation instruction. Further, a manner in which the instruction parsing module reads an operation instruction from the operation instruction set stored in the instruction storage module may be: The instruction parsing module reads, according to an arrangement sequence of operation instructions in the operation instruction set, an operation instruction from the operation instruction set stored in the instruction storage module; and after an operation result corresponding to the operation instruction is stored in the data storage module, the instruction parsing module reads, according to the arrangement sequence of the operation instructions in the operation instruction set, a next operation instruction from the operation instruction set stored in the instruction storage module. That is, the instruction parsing module may obtain one operation instruction from the operation instruction set each time according to the arrangement sequence, and control the arithmetic logic unit to perform an operation corresponding to the operation instruction (that is, perform S602 and S603). Then, after the arithmetic logic unit completes the operation corresponding to the operation instruction (that is, completes S602 and S603), the instruction parsing module obtains a next operation instruction from the operation instruction set according to the arrangement sequence (that is, performs S601 again), and then controls the arithmetic logic unit to perform an operation corresponding to the operation instruction. This is repeated until the arithmetic logic unit executes an operation corresponding to the last operation instruction in the operation instruction set.

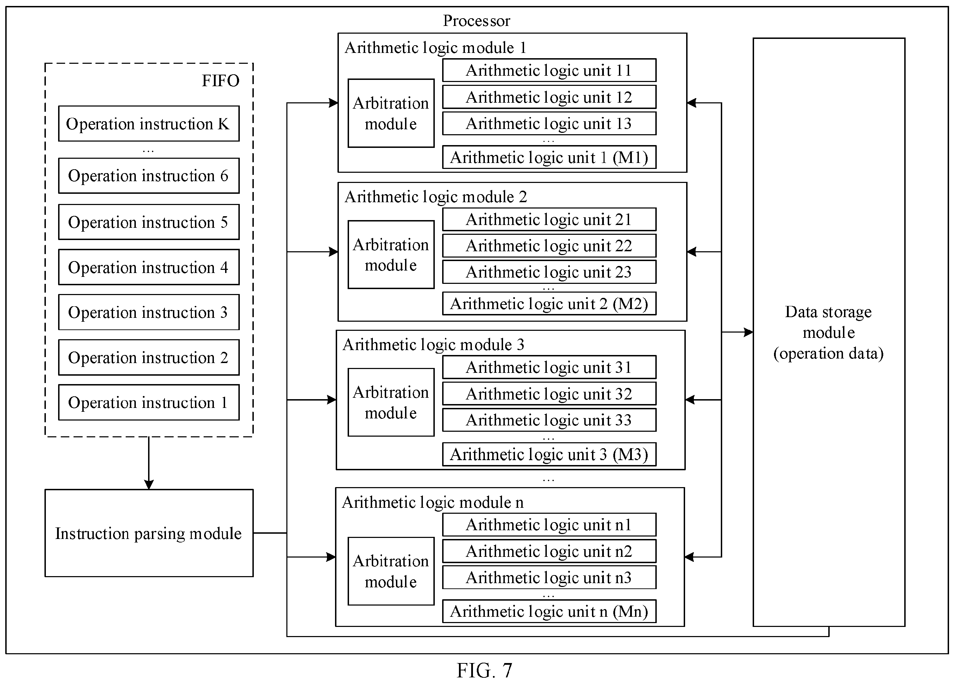

In some examples, the instruction storage module may be a FIFO memory. For example, FIG. 7 is a schematic diagram of a structure of a processor according to an embodiment of this application. An arbiter in FIG. 7 is configured to determine a specific arithmetic logic unit to be enabled to perform an operation, where K is a quantity of operation instructions in an operation instruction set, and is a positive integer. In a process of storing the operation instruction set in the FIFO memory, according to an arrangement sequence of the operation instructions in the operation instruction set, an operation instruction that is executed first may be first written into the FIFO memory, and then an operation instruction that is executed later may be written into the FIFO memory. An instruction parsing module may read the operation instructions in sequence according to a first input first output rule corresponding to the FIFO memory, that is, according to the arrangement sequence of the operation instructions in the operation instruction set. Because the FIFO memory is a readable and writable memory, when the device needs to use another type of encryption algorithm, an operation instruction set of the another type of encryption algorithm may be generated, and the operation instruction set is written into the FIFO, so that a type of an encryption algorithm in the device is configurable, and a plurality of encryption algorithms can be compatible. This improves use flexibility.

In some examples, the instruction storage module in the processor may be a ROM. In a ROM production process, operation instructions in an operation instruction set may be written into the ROM according to an arrangement sequence of the operation instructions in the operation instruction set. Further, the instruction parsing module may also read the operation instructions in sequence according to the arrangement sequence of the operation instructions in the operation instruction set. Because the ROM is a read-only memory, when the device is attacked, an operation instruction in the ROM cannot be changed. This improves algorithm security. In addition, a process of transferring the operation instruction set of the encryption algorithm to the instruction storage module before the encryption operation is performed may alternatively be omitted, to improve efficiency of the encryption operation.

S602: The instruction parsing module sends, based on the parsing information, corresponding control information to an arithmetic logic module that matches the module information.

For example, after the instruction parsing module obtains the parsing information through parsing, the instruction parsing module generates the control information based on the parsing information, and then sends the control information to the arithmetic logic module that matches the module information, to control the arithmetic logic module to perform an operation corresponding to the operation instruction.

In this embodiment of this application, a process in which the instruction parsing module sends, based on the parsing information, the corresponding control information to the arithmetic logic module that matches the module information may include: The instruction parsing module generates a pulse signal based on the module information, and sends the pulse signal to the arithmetic logic module that matches the module information, then generates a level signal based on the security level information, and sends the level signal to the arithmetic logic module that matches the module information, and then generates control data based on the address information, and sends the control data to the arithmetic logic module that matches the module information.

In this embodiment of this application, a first relationship between module information of each arithmetic logic module and an interface may be preconfigured in the instruction parsing module. Further, after obtaining the module information, the instruction parsing module may determine, based on the preconfigured first relationship, an arithmetic logic module that corresponds to a specific interface and to which the pulse signal, the level signal, and the control data are to be sent.

For example, the pulse signal may be used to enable the arithmetic logic module. Therefore, after the instruction parsing module sends the pulse signal to the arithmetic logic module that matches the module information, the arithmetic logic module may be enabled.

In this embodiment of this application, a second relationship between a level signal and an interface (an interface between an arbitration module and an arithmetic logic unit) may be preconfigured in the arbiter. Further, after the instruction parsing module sends the level signal to the enabled arithmetic logic module, the arbiter of the arithmetic logic module may determine, based on the second relationship, a specific arithmetic logic unit to be enabled to perform an operation. In this way, an arithmetic logic unit that is in the arithmetic logic module and that corresponds to security level information is enabled. That is, a level signal may be used to enable an arithmetic logic unit.

Control data may be used to obtain operation data corresponding to an operation instruction. There may be a plurality of manners in which the instruction parsing module generates control data based on the address information. In some examples, the instruction parsing module may use the address information as the control data. Subsequently, the arithmetic logic module may obtain operation data corresponding to an operation instruction from the data storage module, and then input the operation data into a corresponding arithmetic logic unit to perform an operation. In some other examples, the instruction parsing module may obtain, based on the first storage address information, corresponding operation data from the data storage module, and then generate control data based on the obtained operation data. Further, the arithmetic logic module directly inputs the operation data into a corresponding arithmetic logic unit for calculation.

For example, an operation instruction obtained by the instruction parsing module may be shown in Table 7. The instruction parsing module may generate an ALU1_start hardware pulse signal based on the module information 0x01 and send the ALU1_start hardware pulse signal to an arithmetic logic module 1. Then, a level signal whose ALU1_sec_mode is 0 is generated and sent to the arithmetic logic module 1 based on the security level information 0x0. Then, (0x30, 0x20, 0x10) is sent to the arithmetic logic module 1. Certainly, the instruction parsing module may also obtain operation data 2 from a location corresponding to 0x20 in the data storage module, obtain operation data 1 from a location corresponding to 0x10 in the data storage module, and then send the operation data 1 and the operation data 2 to the arithmetic logic module 1.

S603: The arithmetic logic module that matches the module information invokes, based on the control information, an arithmetic logic unit that matches the security level information, performs an operation by using operation data that matches the address information, to obtain an operation result corresponding to the operation instruction, and stores the operation result in the data storage module.

For example, after an arithmetic logic module receives a level signal sent by an instruction parsing module, an arbiter in the arithmetic logic module may enable a corresponding arithmetic logic unit based on the level signal, namely, the arithmetic logic unit that matches the security level information. Then, according to received control data, operation data is input into the arithmetic logic unit. In this way, the arithmetic logic unit may perform an operation based on the operation data, to obtain an operation result.

When the control data is different, manners of obtaining operation data and storing an operation result are also different. For example, when control data is operation data, the arithmetic logic module may enable, based on a level signal, an arithmetic logic unit that matches security level information, and input the control data into the arithmetic logic unit that matches the security level information. Further, the arithmetic logic unit may perform an operation based on the control data to obtain an operation result corresponding to an operation instruction, and output the operation result to the arithmetic logic module that matches module information. Then, the arithmetic logic module may send the operation result to an instruction parsing module, and the instruction parsing module stores the operation result in the data storage module based on second storage address information. That is, the instruction parsing module obtains the operation data from the data storage module, and stores the operation result in the data storage module.

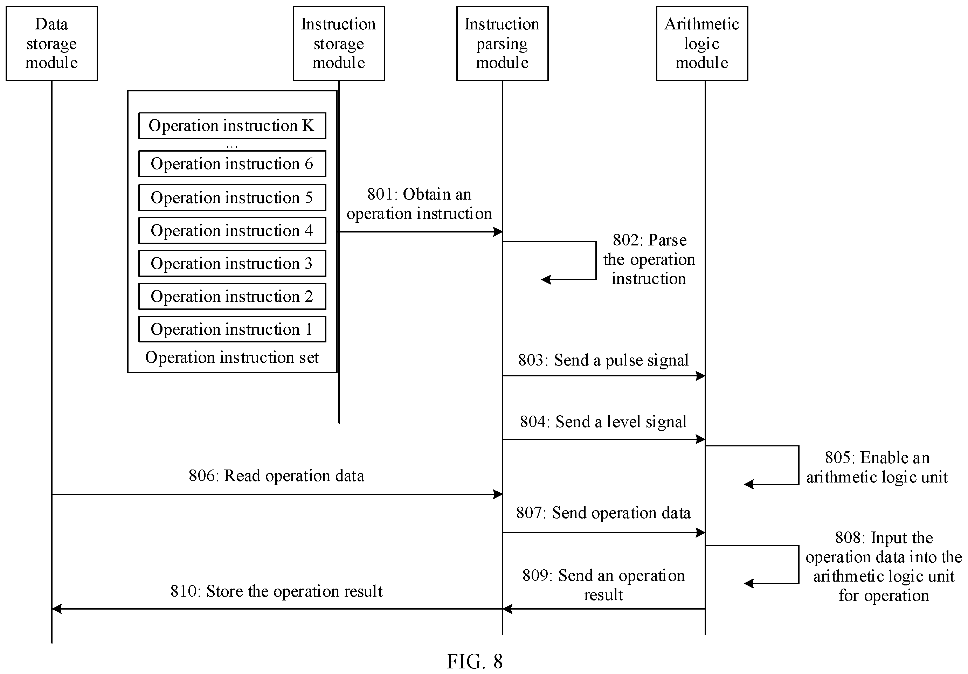

FIG. 8 is a schematic diagram of a process of a data processing method according to an embodiment of this application.

801: An instruction parsing module reads an operation instruction from an instruction storage module.

802: The instruction parsing module parses the operation instruction.

803: The instruction parsing module sends a pulse signal to an arithmetic logic module.

804: The instruction parsing module sends a level signal to the arithmetic logic module.

805: The arithmetic logic module enables an arithmetic logic unit.

806: The instruction parsing module obtains operation data from a data storage module.

807: The instruction parsing module sends the operation data to the arithmetic logic module.

808: The arithmetic logic module inputs the operation data into the arithmetic logic unit, and the arithmetic logic unit performs an operation.

809: The arithmetic logic unit outputs an operation result to the arithmetic logic module, and the arithmetic logic module sends the operation result to the instruction parsing module.

810: The instruction parsing module stores the operation result in the data storage module.

Then, step 801 may be performed again, that is, the instruction parsing module reads a next operation instruction from the instruction storage module, and then step 802 to step 810 are performed until all operation instructions are read and executed.

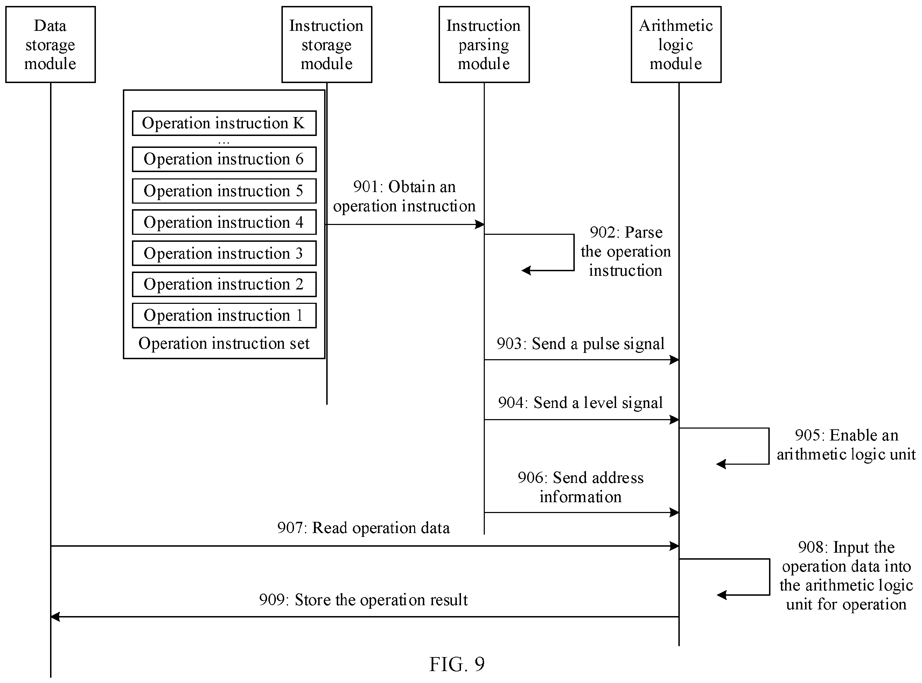

For example, when the control data is address information, the arithmetic logic module starts, based on the level signal, an arithmetic logic unit that matches security level information, and reads, based on first storage address information, matched operation data from the data storage module, and inputs the operation data into the arithmetic logic unit that matches the security level information. Then, the arithmetic logic unit performs an operation based on the operation data to obtain an operation result corresponding to an operation instruction, and outputs the operation result to the arithmetic logic module that matches the module information. Then, the arithmetic logic module stores the operation result in the data storage module based on second storage address information. That is, the arithmetic logic module obtains the operation data from the data storage module, and stores the operation result in the data storage module. FIG. 9 is a schematic diagram of a process of a data processing method according to an embodiment of this application.

901: An instruction parsing module reads an operation instruction from an instruction storage module.

902: The instruction parsing module parses the operation instruction.

903: The instruction parsing module sends a pulse signal to an arithmetic logic module.

904: The instruction parsing module sends a level signal to the arithmetic logic module.

905: The arithmetic logic module enables an arithmetic logic unit.

906: The instruction parsing module sends address information to the arithmetic logic module.

907: The arithmetic logic module obtains operation data from a data storage module.

908: The arithmetic logic module inputs the operation data into the arithmetic logic unit, and the arithmetic logic unit performs an operation.

909: The arithmetic logic unit outputs an operation result to the arithmetic logic module, and the arithmetic logic module stores the operation result in the data storage module.

Then, step 901 may be performed again, that is, the instruction parsing module reads a next operation instruction from the instruction storage module, and then step 902 to step 909 are performed until all operation instructions are read and executed.

Compared with a conventional fixed encryption algorithm in a half-software and half-hardware manner, in this embodiment of this application, in a process of performing an encryption operation, there is no need to interact with a CPU, and therefore, there is no need to occupy a CPU resource, thereby improving CPU utilization. In addition, an arithmetic logic unit may be further configured based on a security level requirement so that security protection for a device can be improved, and scalability of a security level is increased.

Compared with a conventional fixed encryption algorithm in an all-hardware manner, in this embodiment of this application, a quantity of arithmetic logical units can be configured based on a security level requirement, a processor resource, an area, and other requirements. In addition, in this embodiment of this application, sizes of an instruction storage module and a data storage module may be further configured based on a requirement for a processor resource and an area, so that a hardware design is more flexible and controllable. In addition, when the device needs to use another encryption algorithm, an operation instruction set may be configured, and a type of an arithmetic logic module may be configured. This improves compatibility of types of encryption algorithms, and meets a requirement of the device for an encryption algorithm type. When the device needs to use an encryption algorithm of another security level, the device may configure an arithmetic logical unit, so that the configured arithmetic logical unit can implement an operation of the corresponding security level. This improves scalability of security levels and meets a requirement of devices for a plurality of security levels.

An application scenario of this embodiment of this application may be that the processor currently performs an encryption operation by using an encryption algorithm Algol. When the device needs to use an encryption algorithm Algo2, if an arithmetic logic module required by the encryption algorithm Algol is the same as an arithmetic logic module required by the encryption algorithm Algo2, an operation instruction set corresponding to the encryption algorithm Algo2 may be generated and stored in the instruction storage module. The operation data corresponding to the encryption algorithm Algo2 may be stored in the data storage module. Then, an encryption operation of the encryption algorithm Algo2 is implemented according to the data processing method in this embodiment of this application.

Another application scenario of this embodiment of this application may be that the processor currently performs an encryption operation by using an encryption algorithm Algol. When the device needs to use the encryption algorithm Algo2, if an arithmetic logic module required by the encryption algorithm Algo1 is different from an arithmetic logic module required by the encryption algorithm Algo2, on one hand, an operation instruction set corresponding to the encryption algorithm Algo2 may be generated and stored in the instruction storage module, and operation data corresponding to the encryption algorithm Algo2 may be stored in the data storage module. On the other hand, an arithmetic logic module required for the encryption algorithm Algo2 may be added. Then, an encryption operation of the encryption algorithm Algo2 is implemented according to the data processing method in this embodiment of this application.

Still another application scenario of this embodiment of this application may be that the processor currently performs an encryption operation by using an encryption algorithm Algo1 with a low security level. When the device needs to use an encryption algorithm Algol with a high security level, an operation instruction set corresponding to the encryption algorithm Algo1 with the high security level may be generated, and stored in the instruction storage module (a sec_mode field in an operation instruction may be reconfigured based on a current operation instruction set and a security level requirement). If each current arithmetic logic module has an algorithm logic unit that implements a security level requirement, an encryption operation of the encryption algorithm Algo2 is implemented according to the data processing method in this embodiment of this application. If there is an arithmetic logic module that does not have an algorithm logic unit that can implement a security level requirement among the current arithmetic logic modules, the arithmetic logic unit that can implement the security level requirement may be added to the corresponding arithmetic logic module based on the security level requirement. Then, an encryption operation of the encryption algorithm Algo2 is implemented according to the data processing method in this embodiment of this application.

Still another application scenario of this embodiment of this application may be as follows: The arithmetic logic module includes arithmetic logic units that can implement a plurality of security levels, as shown in FIG. 3. An attribute value of a sec_mode field of an operation instruction in an operation instruction set stored in the current instruction storage module is 1, that is, the corresponding security level is 1, which can defend against a simple power consumption attack. When the device is under a differential power consumption attack, the attribute value of the sec_mode field of the operation instruction in the operation instruction set may be set to 2. Then, an encryption operation of the encryption algorithm Algo2 is implemented according to the data processing method in this embodiment of this application. In this way, an arithmetic logic unit corresponding to a security level 2 can be used to perform an operation, to defend against the differential power consumption attack.

In this embodiment of this application, after an operation corresponding to the last operation instruction in the operation instruction set is executed and an operation result corresponding to the last operation instruction is stored in the data storage module, the CPU may actively read the operation result corresponding to the last operation instruction from the data storage module, to obtain a final result of the encryption operation. Alternatively, the processor may actively store the operation result corresponding to the last operation instruction to a memory outside the processor. When a service includes one task, the processor may store, based on an attribute value corresponding to an ins_id field in the last operation instruction, the operation result corresponding to the last operation instruction into the memory outside the processor. When a service includes a plurality of tasks, for each task, an operation result corresponding to the last operation instruction of each task may be stored in the memory outside the processor based on an attribute value corresponding to an ins_id field in the last operation instruction of each task.

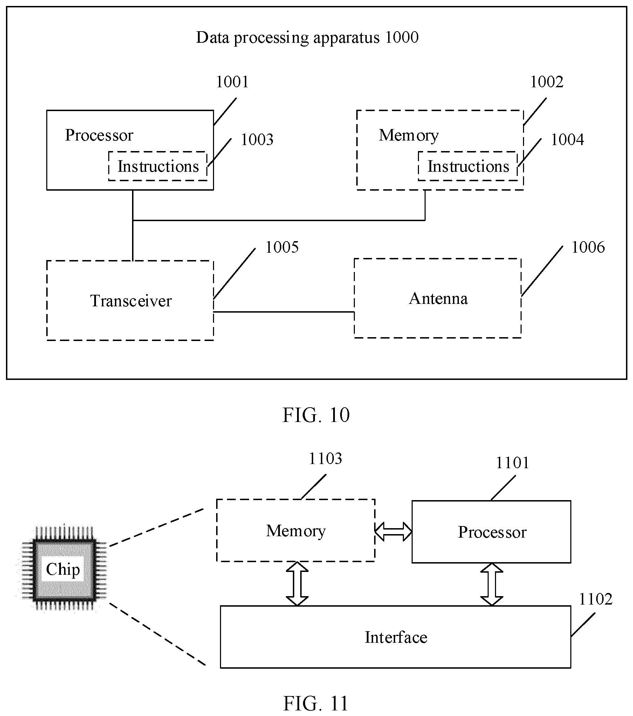

The following describes an apparatus provided in an embodiment of this application. Details are shown in FIG. 10.

FIG. 10 is a schematic diagram of a structure of an apparatus according to an embodiment of this application. As shown in FIG. 10, the apparatus 1000 may include a processor 1001 and a transceiver 1005, and optionally further include a memory 1002.

The transceiver 1005 may be referred to as a transceiver unit, a transceiver machine, a transceiver circuit, or the like, and is configured to implement a transceiver function. The transceiver 1005 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function.

The memory 1002 may store a computer program, software code, or instructions 1004, and the computer program, the software code, or the instructions 1004 may also be referred to as firmware. The processor 1001 may control a MAC layer and a PHY layer by running a computer program, software code, or instructions 1003, or by invoking the computer program, the software code, or the instructions 1004 stored in the memory 1002, to implement an OM negotiation method provided in the following embodiments of this application. The processor 1001 may be a coprocessor, and the memory 1002 may be, for example, a read-only memory (read-only memory, ROM), or a random access memory (random access memory, RAM).

The processor 1001 and the transceiver 1005 that are described in this application may be implemented on an integrated circuit (integrated circuit, IC), an analog IC, a radio frequency integrated circuit RFIC, a mixed-signal IC, an application specific integrated circuit (application specific integrated circuit, ASIC), a printed circuit board (printed circuit board, PCB), an electronic device, or the like.

The apparatus 1000 may further include an antenna 1006. Modules included in the apparatus 1000 are merely examples for description, and this is not limited in this application.

As described above, the apparatus described in the foregoing embodiments may be a terminal. However, a scope of the apparatus described in this application is not limited thereto, and a structure of the apparatus may not be limited by FIG. 10. The apparatus may be an independent device, or may be a part of a larger device. For example, an implementation form of the apparatus may be:
(1) an independent integrated circuit IC, a chip, a chip system, or a subsystem; (2) a set including one or more ICs, and optionally, the IC set may include a storage component for storing data and instructions; (3) a module that can be embedded in another device; (4) a receiver, an intelligent terminal, a wireless device, a handheld device, a mobile unit, a vehicle-mounted device, a cloud device, an artificial intelligence device; or (5) others.

For the apparatus implemented in the form of the chip or the chip system, refer to a schematic diagram of a structure of a chip shown in FIG. 11. The chip shown in FIG. 11 includes a processor 1101 and an interface 1102. There may be one or more processors 1101, and there may be a plurality of interfaces 1102. Optionally, the chip or the chip system may include a memory 1103.

All related content of the steps in the foregoing method embodiments may be cited in function descriptions of the corresponding functional modules. Details are not described herein again.

Based on a same technical concept, an embodiment of this application further provides a computer-readable storage medium. The computer-readable storage medium stores a computer program, the computer program includes at least one segment of code, and the at least one segment of code may be executed by an electronic device, to control the electronic device to implement the foregoing method embodiments.

Based on a same technical concept, an embodiment of this application further provides a computer program. When the computer program is executed by an electronic device, the computer program is used to implement the foregoing method embodiments.

The program may be all or partially stored in a storage medium that is encapsulated with a processor, or may be all or partially stored in a memory that is not encapsulated with a processor.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (Random Access Memory, RAM), a flash memory, a read only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be disposed in a network device. Certainly, the processor and the storage medium may exist in network equipment as discrete components.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communications medium, where the communications medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

## Claims

1. A processor, comprising: a data storage module, an instruction storage module, an instruction parsing module, and a plurality of arithmetic logic modules, wherein one arithmetic logic module comprises at least one arithmetic logic unit, and one arithmetic logic unit is configured to implement an operation of one security level, wherein
the data storage module is configured to store operation data and an operation result of an encryption algorithm;
the instruction storage module is configured to store an operation instruction set of the encryption algorithm;
the instruction parsing module is configured to: read an operation instruction from the operation instruction set stored in the instruction storage module, and parse the operation instruction to obtain parsing information, wherein the parsing information comprises module information, security level information, and address information; and send, based on the parsing information, corresponding control information to an arithmetic logic module that matches the module information; and
the arithmetic logic module is configured to: invoke, based on the control information, an arithmetic logic unit that matches the security level information, perform an operation by using operation data that matches the address information, to obtain an operation result corresponding to the operation instruction, and store the operation result in the data storage module.

2. The processor according to claim 1, wherein the operation instruction set comprises a plurality of operation instructions, and the operation instructions are arranged in the operation instruction set according to an operation sequence of a plurality of operations corresponding to the encryption algorithm; and
the instruction parsing module is configured to: read, according to an arrangement sequence of the operation instructions in the operation instruction set, an operation instruction from the operation instruction set stored in the instruction storage module; and after an operation result corresponding to the operation instruction is stored in the data storage module, read, according to the arrangement sequence of the operation instructions in the operation instruction set, a next operation instruction from the operation instruction set stored in the instruction storage module.

3. The processor according to claim 1, wherein the control information comprises a pulse signal, a level signal, and control data; and
the instruction parsing module is configured to: generate the pulse signal based on the module information, and send the pulse signal to the arithmetic logic module that matches the module information; generate the level signal based on the security level information, and send the level signal to the arithmetic logic module that matches the module information; and generate the control data based on the address information, and send the control data to the arithmetic logic module that matches the module information.

4. The processor according to claim 3, wherein
the instruction parsing module is configured to use the address information as the control data.

5. The processor according to claim 3, wherein the address information comprises first storage address information of the operation data; and
the instruction parsing module is configured to: obtain, based on the first storage address information, the corresponding operation data from the data storage module; and generate the control data based on the obtained operation data.

6. The processor according to claim 4, wherein the address information comprises first storage address information of the operation data and second storage address information of the operation result;
the arithmetic logic module is configured to: start, based on the level signal, an arithmetic logic unit that matches the security level information; and read, based on the first storage address information, matched operation data from the data storage module, and input the operation data into the arithmetic logic unit that matches the security level information;
the arithmetic logic unit is configured to: perform an operation based on the operation data to obtain the operation result corresponding to the operation instruction, and output the operation result to the arithmetic logic module that matches the module information; and
the arithmetic logic module is configured to store the operation result in the data storage module based on the second storage address information.

7. The processor according to claim 5, wherein the address information further comprises second storage address information of the operation result, and
the arithmetic logic module is configured to: start, based on the level signal, an arithmetic logic unit that matches the security level information, and input the control data into the arithmetic logic unit that matches the security level information;
the arithmetic logic unit is configured to: perform an operation based on the control data to obtain the operation result corresponding to the operation instruction, and output the operation result to the arithmetic logic module that matches the module information;
the arithmetic logic module is configured to send the operation result to the instruction parsing module; and
the instruction parsing module is configured to store the operation result in the data storage module based on the second storage address information.

8. The processor according to claim 1, wherein
the security level comprises a level without an attack defense capability and a level with an attack defense capability; and
one security level with an attack defense capability is used to defend against at least one type of attack.

9. The processor according to claim 1, wherein
different arithmetic logic units in an arithmetic logic module implement different security levels; and
security levels implemented by arithmetic logic units in different arithmetic logic modules are different or the same.

10. A data processing method, applied to a processor, wherein the processor comprises a data storage module, an instruction storage module, an instruction parsing module, and a plurality of arithmetic logic modules, wherein
the data storage module stores operation data of an encryption algorithm; the instruction storage module stores an operation instruction set of the encryption algorithm, one arithmetic logic module comprises at least one arithmetic logic unit, and one arithmetic logic unit is configured to implement an operation of one security level; and the method comprises:
reading, by the instruction parsing module, an operation instruction from the operation instruction set stored in the instruction storage module, and parsing the operation instruction to obtain parsing information, wherein the parsing information comprises module information, security level information, and address information;
sending, by the instruction parsing module based on the parsing information, corresponding control information to an arithmetic logic module that matches the module information; and
invoking, based on the control information by the arithmetic logic module that matches the module information, an arithmetic logic unit that matches the security level information, performing an operation by using operation data that matches the address information, to obtain an operation result corresponding to the operation instruction, and storing the operation result in the data storage module.

11. The method according to claim 10, wherein the operation instruction set comprises a plurality of operation instructions, and the operation instructions are arranged in the operation instruction set according to an operation sequence of a plurality of operations corresponding to the encryption algorithm; and
the reading, by the instruction parsing module, an operation instruction from the operation instruction set stored in the instruction storage module comprises:
reading, by the instruction parsing module according to an arrangement sequence of the operation instructions in the operation instruction set, an operation instruction from the operation instruction set stored in the instruction storage module; and after an operation result corresponding to the operation instruction is stored in the data storage module, reading, by the instruction parsing module according to the arrangement sequence of the operation instructions in the operation instruction set, a next operation instruction from the operation instruction set stored in the instruction storage module.

12. The method according to claim 10, wherein the control information comprises a pulse signal, a level signal, and control data; and
the sending, by the instruction parsing module based on the parsing information, corresponding control information to an arithmetic logic module that matches the module information comprises:
generating, by the instruction parsing module, the pulse signal based on the module information, and sending the pulse signal to the arithmetic logic module that matches the module information;
generating, by the instruction parsing module, the level signal based on the security level information, and sending the level signal to the arithmetic logic module that matches the module information; and
generating, by the instruction parsing module, the control data based on the address information, and sending the control data to the arithmetic logic module that matches the module information.

13. The method according to claim 12, wherein the generating, by the instruction parsing module, the control data based on the address information comprises:
using, by the instruction parsing module, the address information as the control data.

14. The method according to claim 12, wherein the address information comprises first storage address information of the operation data, and the generating, by the instruction parsing module, the control data based on the address information comprises:
obtaining, by the instruction parsing module based on the first storage address information, the corresponding operation data from the data storage module; and
generating the control data based on the obtained operation data.

15. The method according to claim 13, wherein the address information comprises first storage address information of the operation data and second storage address information of the operation result; the invoking, based on the control information by the arithmetic logic module that matches the module information, an arithmetic logic unit that matches the security level information, performing an operation by using operation data that matches the address information, to obtain an operation result corresponding to the operation instruction, and storing the operation result in the data storage module comprises:
starting, by the arithmetic logic module that matches the module information based on the level signal, an arithmetic logic unit that matches the security level information; and reading, based on the first storage address information, matched operation data from the data storage module, and inputting the operation data into the arithmetic logic unit that matches the security level information;
performing, by the arithmetic logic unit that matches the security level information, an operation based on the operation data to obtain the operation result corresponding to the operation instruction, and outputting the operation result to the arithmetic logic module that matches the module information; and
storing, by the arithmetic logic module that matches the module information, the operation result in the data storage module based on the second storage address information.

## Patentansprüche

1. Prozessor, umfassend: ein Datenspeichermodul, ein Anweisungsspeichermodul, ein Anweisungsparsingmodul und eine Vielzahl von arithmetischen Logikmodulen, wobei ein arithmetisches Logikmodul mindestens eine arithmetische Logikeinheit umfasst und eine arithmetische Logikeinheit dazu konfiguriert ist, einen Vorgang einer Sicherheitsstufe zu implementieren, wobei
das Datenspeichermodul dazu konfiguriert ist, Vorgangsdaten und ein Vorgangsergebnis eines Verschlüsselungsalgorithmus zu speichern;
das Anweisungsspeichermodul dazu konfiguriert ist, einen Vorgangsanweisungssatz des Verschlüsselungsalgorithmus zu speichern;
das Anweisungsparsingmodul zu Folgendem konfiguriert ist:
Auslesen einer Vorgangsanweisung aus dem Vorgangsanweisungssatz, der in dem Anweisungsspeichermodul gespeichert ist, und Parsen der Vorgangsanweisung, um Parsinginformationen zu erlangen, wobei die Parsinginformationen Modulinformationen, Sicherheitsstufeninformationen und Adressinformationen umfassen; und Senden, basierend auf den Parsinginformationen, entsprechender Steuerinformationen an ein arithmetisches Logikmodul, das mit den Modulinformationen übereinstimmt; und
das arithmetische Logikmodul zu Folgendem konfiguriert ist:
Aufrufen, basierend auf den Steuerinformationen, einer arithmetischen Logikeinheit, die mit den Sicherheitsstufeninformationen übereinstimmt, Durchführen eines Vorgangs unter Verwendung von Vorgangsdaten, die mit den Adressinformationen übereinstimmen, um ein Vorgangsergebnis zu erlangen, das der Vorgangsanweisung entspricht, und Speichern des Vorgangsergebnisses in dem Datenspeichermodul.

2. Prozessor nach Anspruch 1, wobei der Vorgangsanweisungssatz eine Vielzahl von Vorgangsanweisungen umfasst und die Vorgangsanweisungen gemäß einer Vorgangssequenz einer Vielzahl von Vorgängen, die dem Verschlüsselungsalgorithmus entsprechen, in dem Vorgangsanweisungssatz angeordnet sind; und
das Anweisungsparsingmodul zu Folgendem konfiguriert ist:
Auslesen, gemäß einer Anordnungssequenz der Vorgangsanweisungen in dem Vorgangsanweisungssatz, einer Vorgangsanweisung aus dem Vorgangsanweisungssatz, der in dem Anweisungsspeichermodul gespeichert ist; und, nachdem ein Vorgangsergebnis, das der Vorgangsanweisung entspricht, in dem Datenspeichermodul gespeichert wurde, Auslesen, gemäß der Anordnungssequenz der Vorgangsanweisungen in dem Vorgangsanweisungssatz, einer nächsten Vorgangsanweisung aus dem Vorgangsanweisungssatz, der in dem Anweisungsspeichermodul gespeichert ist.

3. Prozessor nach Anspruch 1, wobei die Steuerinformationen ein Impulssignal, ein Stufensignal und Steuerdaten umfassen; und
das Anweisungsparsingmodul zu Folgendem konfiguriert ist:
Erzeugen des Impulssignals basierend auf den Modulinformationen und Senden des Impulssignals an das arithmetische Logikmodul, das mit den Modulinformationen übereinstimmt; Erzeugen des Stufensignals basierend auf den Sicherheitsstufeninformationen und Senden des Stufensignals an das arithmetische Logikmodul, das mit den Modulinformationen übereinstimmt; und Erzeugen der Steuerdaten basierend auf den Adressinformationen und Senden der Steuerdaten an das arithmetische Logikmodul, das mit den Modulinformationen übereinstimmt.

4. Prozessor nach Anspruch 3, wobei
das Anweisungsparsingmodul dazu konfiguriert ist, die Adressinformationen als die Steuerdaten zu verwenden.

5. Prozessor nach Anspruch 3, wobei die Adressinformationen erste Speicheradressinformationen der Vorgangsdaten umfassen; und
das Anweisungsparsingmodul zu Folgendem konfiguriert ist:
Erlangen, basierend auf den ersten Speicheradressinformationen, der entsprechenden Vorgangsdaten aus dem Datenspeichermodul; und
Erzeugen der Steuerdaten basierend auf den erlangten Vorgangsdaten.

6. Prozessor nach Anspruch 4, wobei die Adressinformationen erste Speicheradressinformationen der Vorgangsdaten und zweite Speicheradressinformationen des Vorgangsergebnisses umfassen; das arithmetische Logikmodul zu Folgendem konfiguriert ist:
Starten, basierend auf dem Stufensignal, einer arithmetischen Logikeinheit, die mit den Sicherheitsstufeninformationen übereinstimmt; und Auslesen, basierend auf den ersten Speicheradressinformationen, übereinstimmender Vorgangsdaten aus dem Datenspeichermodul und Eingeben der Vorgangsdaten in die arithmetische Logikeinheit, die mit den Sicherheitsstufeninformationen übereinstimmt;
die arithmetische Logikeinheit zu Folgendem konfiguriert ist:
Durchführen eines Vorgangs basierend auf den Vorgangsdaten, um das Vorgangsergebnis zu erlangen, das der Vorgangsanweisung entspricht, und Ausgeben des Vorgangsergebnisses an das arithmetische Logikmodul, das mit den Modulinformationen übereinstimmt; und
das arithmetische Logikmodul dazu konfiguriert ist, das Vorgangsergebnis basierend auf den zweiten Speicheradressinformationen in dem Datenspeichermodul zu speichern.

7. Prozessor nach Anspruch 5, wobei die Adressinformationen ferner zweite Speicheradressinformationen des Vorgangsergebnisses umfassen; und
das arithmetische Logikmodul zu Folgendem konfiguriert ist:
Starten, basierend auf dem Stufensignal, einer arithmetischen Logikeinheit, die mit den Sicherheitsstufeninformationen übereinstimmt; und Eingeben der Steuerdaten in die arithmetische Logikeinheit, die mit den Sicherheitsstufeninformationen übereinstimmt;
die arithmetische Logikeinheit zu Folgendem konfiguriert ist:
Durchführen eines Vorgangs basierend auf den Steuerdaten, um das Vorgangsergebnis zu erlangen, das der Vorgangsanweisung entspricht, und Ausgeben des Vorgangsergebnisses an das arithmetische Logikmodul, das mit den Modulinformationen übereinstimmt;
das arithmetische Logikmodul dazu konfiguriert ist, das Vorgangsergebnis an das Anweisungsparsingmodul zu senden; und das Anweisungsparsingmodul dazu konfiguriert ist, das Vorgangsergebnis basierend auf den zweiten Speicheradressinformationen in dem Datenspeichermodul zu speichern.

8. Prozessor nach Anspruch 1, wobei
die Sicherheitsstufe eine Stufe ohne eine Angriffsabwehrfähigkeit und eine Stufe mit einer Angriffsabwehrfähigkeit umfasst; und
eine Sicherheitsstufe mit einer Angriffsabwehrfähigkeit verwendet wird, um mindestens eine Art von Angriffen abzuwehren.

9. Prozessor nach Anspruch 1, wobei
unterschiedliche arithmetische Logikeinheiten in einem arithmetischen Logikmodul unterschiedliche Sicherheitsstufen implementieren; und
Sicherheitsstufen, die von arithmetischen Logikeinheiten in unterschiedlichen arithmetischen Logikmodulen implementiert werden, entweder unterschiedlich oder gleich sind.

10. Datenverarbeitungsverfahren, das auf einen Prozessor angewendet wird, wobei der Prozessor ein Datenspeichermodul, ein Anweisungsspeichermodul, ein Anweisungsparsingmodul und eine Vielzahl von arithmetischen Logikmodulen umfasst, wobei
das Datenspeichermodul Vorgangsdaten eines Verschlüsselungsalgorithmus speichert; das Anweisungsspeichermodul einen Vorgangsanweisungssatz des Verschlüsselungsalgorithmus speichert, ein arithmetisches Logikmodul mindestens eine arithmetische Logikeinheit umfasst und eine arithmetische Logikeinheit dazu konfiguriert ist, einen Vorgang einer Sicherheitsstufe zu implementieren; und wobei das Verfahren Folgendes umfasst:
Auslesen, durch das Anweisungsparsingmodul, einer Vorgangsanweisung aus dem Vorgangsanweisungssatz, der in dem Anweisungsspeichermodul gespeichert ist, und Parsen der Vorgangsanweisung, um Parsinginformationen zu erlangen, wobei die Parsinginformationen Modulinformationen, Sicherheitsstufeninformationen und Adressinformationen umfassen;
Senden, durch das Anweisungsparsingmodul, basierend auf den Parsinginformationen, entsprechender Steuerinformationen an ein arithmetisches Logikmodul, das mit den Modulinformationen übereinstimmt; und
Aufrufen, basierend auf den Steuerinformationen, durch das arithmetische Logikmodul, das mit den Modulinformationen übereinstimmt, einer arithmetischen Logikeinheit, die mit den Sicherheitsstufeninformationen übereinstimmt, Durchführen eines Vorgangs unter Verwendung von Vorgangsdaten, die mit den Adressinformationen übereinstimmen, um ein Vorgangsergebnis zu erlangen, das der Vorgangsanweisung entspricht, und Speichern des Vorgangsergebnisses in dem Datenspeichermodul.

11. Verfahren nach Anspruch 10, wobei der Vorgangsanweisungssatz eine Vielzahl von Vorgangsanweisungen umfasst und die Vorgangsanweisungen gemäß einer Vorgangssequenz einer Vielzahl von Vorgängen, die dem Verschlüsselungsalgorithmus entsprechen, in dem Vorgangsanweisungssatz angeordnet sind; und
das Auslesen, durch das Anweisungsparsingmodul, einer Vorgangsanweisung aus dem Vorgangsanweisungssatz, der in dem Anweisungsspeichermodul gespeichert ist, Folgendes umfasst:
Auslesen, durch das Anweisungsparsingmodul, gemäß einer Anordnungssequenz der Vorgangsanweisungen in dem Vorgangsanweisungssatz, einer Vorgangsanweisung aus dem Vorgangsanweisungssatz, der in dem Anweisungsspeichermodul gespeichert ist; und, nachdem ein Vorgangsergebnis, das der Vorgangsanweisung entspricht, in dem Datenspeichermodul gespeichert wurde, Auslesen, durch das Anweisungsparsingmodul, gemäß der Anordnungssequenz der Vorgangsanweisungen in dem Vorgangsanweisungssatz, einer nächsten Vorgangsanweisung aus dem Vorgangsanweisungssatz, der in dem Anweisungsspeichermodul gespeichert ist.

12. Verfahren nach Anspruch 10, wobei die Steuerinformationen ein Impulssignal, ein Stufensignal und Steuerdaten umfassen; und das Senden, durch das Anweisungsparsingmodul, basierend auf den Parsinginformationen, entsprechender Steuerinformationen an ein arithmetisches Logikmodul, das mit den Modulinformationen übereinstimmt, Folgendes umfasst:
Erzeugen, durch das Anweisungsparsingmodul, des Impulssignals basierend auf den Modulinformationen und Senden des Impulssignals an das arithmetische Logikmodul, das mit den Modulinformationen übereinstimmt;
Erzeugen, durch das Anweisungsparsingmodul, des Stufensignals basierend auf den Sicherheitsstufeninformationen und Senden des Stufensignals an das arithmetische Logikmodul, das mit den Modulinformationen übereinstimmt; und
Erzeugen, durch das Anweisungsparsingmodul, der Steuerdaten basierend auf den Adressinformationen und Senden der Steuerdaten an das arithmetische Logikmodul, das mit den Modulinformationen übereinstimmt.

13. Verfahren nach Anspruch 12, wobei das Erzeugen, durch das Anweisungsparsingmodul, der Steuerdaten basierend auf den Adressinformationen Folgendes umfasst:
Verwenden, durch das Anweisungsparsingmodul, der Adressinformationen als die Steuerdaten.

14. Verfahren nach Anspruch 12, wobei die Adressinformationen erste Speicheradressinformationen der Vorgangsdaten umfassen und das Erzeugen, durch das Anweisungsparsingmodul, der Steuerdaten basierend auf den Adressinformationen Folgendes umfasst:
Erlangen, durch das Anweisungsparsingmodul, basierend auf den ersten Speicheradressinformationen, der entsprechenden Vorgangsdaten aus dem Datenspeichermodul; und
Erzeugen der Steuerdaten basierend auf den erlangten Vorgangsdaten.

15. Verfahren nach Anspruch 13, wobei die Adressinformationen erste Speicheradressinformationen der Vorgangsdaten und zweite Speicheradressinformationen des Vorgangsergebnisses umfassen; das Aufrufen, basierend auf den Steuerinformationen, durch das arithmetische Logikmodul, das mit den Modulinformationen übereinstimmt, einer arithmetischen Logikeinheit, die mit den Sicherheitsstufeninformationen übereinstimmt, Durchführen eines Vorgangs unter Verwendung von Vorgangsdaten, die mit den Adressinformationen übereinstimmen, um ein Vorgangsergebnis zu erlangen, das der Vorgangsanweisung entspricht, und Speichern des Vorgangsergebnisses in dem Datenspeichermodul Folgendes umfasst:
Starten, durch das arithmetische Logikmodul, das mit den Modulinformationen übereinstimmt, basierend auf dem Stufensignal, einer arithmetischen Logikeinheit, die mit den Sicherheitsstufeninformationen übereinstimmt; und Auslesen, basierend auf den ersten Speicheradressinformationen, übereinstimmender Vorgangsdaten aus dem Datenspeichermodul und Eingeben der Vorgangsdaten in die arithmetische Logikeinheit, die mit den Sicherheitsstufeninformationen übereinstimmt;
Durchführen, durch die arithmetische Logikeinheit, die mit den Sicherheitsstufeninformationen übereinstimmt, eines Vorgangs basierend auf den Vorgangsdaten, um das Vorgangsergebnis zu erlangen, das der Vorgangsanweisung entspricht, und Ausgeben des Vorgangsergebnisses an das arithmetische Logikmodul, das mit den Modulinformationen übereinstimmt; und
Speichern, durch das arithmetische Logikmodul, das mit den Modulinformationen übereinstimmt, des Vorgangsergebnisses in dem Datenspeichermodul basierend auf den zweiten Speicheradressinformationen.

## Revendications

1. Processeur comprenant : un module de stockage de données, un module de stockage d'instructions, un module d'analyse d'instructions et une pluralité de modules logiques arithmétiques, dans lequel un module logique arithmétique comprend au moins une unité logique arithmétique, et une unité logique arithmétique est configurée pour mettre en œuvre une opération d'un niveau de sécurité, dans lequel
le module de stockage de données est configuré pour stocker des données d'opération et un résultat d'opération d'un algorithme de chiffrement ;
le module de stockage d'instructions est configuré pour stocker un ensemble d'instructions d'opération de l'algorithme de chiffrement ;
le module d'analyse d'instructions est configuré pour : lire une instruction d'opération de l'ensemble d'instructions d'opération stocké dans le module de stockage d'instructions, et analyser l'instruction d'opération pour obtenir des informations d'analyse, dans lequel les informations d'analyse comprennent des informations de module, des informations de niveau de sécurité et des informations d'adresse ; et envoyer, sur la base des informations d'analyse, des informations de commande correspondantes à un module logique arithmétique qui concorde avec les informations de module ; et
le module logique arithmétique est configuré pour : appeler, sur la base des informations de commande, une unité logique arithmétique qui concorde avec les informations de niveau de sécurité, réaliser une opération en utilisant des données d'opération qui concordent avec les informations d'adresse, pour obtenir un résultat d'opération correspondant à l'instruction d'opération, et stocker le résultat d'opération dans le module de stockage de données.

2. Processeur selon la revendication 1, dans lequel l'ensemble d'instructions d'opération comprend une pluralité d'instructions d'opération, et les instructions d'opération sont agencées dans l'ensemble d'instructions d'opération selon une séquence d'opération d'une pluralité d'opérations correspondant à l'algorithme de chiffrement ; et
le module d'analyse d'instructions est configuré pour : lire, selon une séquence d'agencement des instructions d'opération dans l'ensemble d'instructions d'opération, une instruction d'opération de l'ensemble d'instructions d'opération stocké dans le module de stockage d'instructions ; et après qu'un résultat d'opération correspondant à l'instruction d'opération est stocké dans le module de stockage de données, lire, selon la séquence d'agencement des instructions d'opération dans l'ensemble d'instructions d'opération, une instruction d'opération suivante de l'ensemble d'instructions d'opération stocké dans le module de stockage d'instructions.

3. Processeur selon la revendication 1, dans lequel les informations de commande comprennent un signal d'impulsion, un signal de niveau et des données de commande ; et
le module d'analyse d'instructions est configuré pour : générer le signal d'impulsion sur la base des informations de module, et envoyer le signal d'impulsion au module logique arithmétique qui concorde avec les informations de module ; générer le signal de niveau sur la base des informations de niveau de sécurité, et envoyer le signal de niveau au module logique arithmétique qui concorde avec les informations de module ; et générer les données de commande sur la base des informations d'adresse, et envoyer les données de commande au module logique arithmétique qui concorde avec les informations de module.

4. Processeur selon la revendication 3, dans lequel
le module d'analyse d'instructions est configuré pour utiliser les informations d'adresse comme données de commande.

5. Processeur selon la revendication 3, dans lequel les informations d'adresse comprennent des premières informations d'adresse de stockage des données d'opération ; et
le module d'analyse d'instructions est configuré pour : obtenir, sur la base des premières informations d'adresse de stockage, les données d'opération correspondantes à partir du module de stockage de données ; et générer les données de commande sur la base des données d'opération obtenues.

6. Processeur selon la revendication 4, dans lequel les informations d'adresse comprennent des premières informations d'adresse de stockage des données d'opération et des secondes informations d'adresse de stockage du résultat d'opération ;
le module logique arithmétique est configuré pour : démarrer, sur la base du signal de niveau, une unité logique arithmétique qui concorde avec les informations de niveau de sécurité ; et lire, sur la base des premières informations d'adresse de stockage, des données d'opération concordantes du module de stockage de données, et entrer les données d'opération dans l'unité logique arithmétique qui concorde avec les informations de niveau de sécurité ;
l'unité logique arithmétique est configurée pour : réaliser une opération sur la base des données d'opération pour obtenir le résultat d'opération correspondant à l'instruction d'opération, et délivrer en sortie le résultat d'opération au module logique arithmétique qui concorde avec les informations de module ; et
le module logique arithmétique est configuré pour stocker le résultat d'opération dans le module de stockage de données sur la base des secondes informations d'adresse de stockage.

7. Processeur selon la revendication 5, dans lequel les informations d'adresse comprennent également des secondes informations d'adresse de stockage du résultat d'opération, et
le module logique arithmétique est configuré pour : démarrer, sur la base du signal de niveau, une unité logique arithmétique qui concorde avec les informations de niveau de sécurité, et entrer les données de commande dans l'unité logique arithmétique qui concorde avec les informations de niveau de sécurité ;
l'unité logique arithmétique est configurée pour : réaliser une opération sur la base des données de commande pour obtenir le résultat d'opération correspondant à l'instruction d'opération, et délivrer en sortie le résultat d'opération au module logique arithmétique qui concorde avec les informations de module ;
le module logique arithmétique est configuré pour envoyer le résultat d'opération au module d'analyse d'instructions ; et
le module d'analyse d'instructions est configuré pour stocker le résultat d'opération dans le module de stockage de données sur la base des secondes informations d'adresse de stockage.

8. Processeur selon la revendication 1, dans lequel
le niveau de sécurité comprend un niveau sans capacité de défense contre les attaques et un niveau avec capacité de défense contre les attaques ; et
un niveau de sécurité avec capacité de défense contre les attaques est utilisé pour se défendre contre au moins un type d'attaque.

9. Processeur selon la revendication 1, dans lequel
différentes unités logiques arithmétiques dans un module logique arithmétique mettent en œuvre différents niveaux de sécurité ; et
des niveaux de sécurité mis en œuvre par des unités logiques arithmétiques dans différents modules logiques arithmétiques sont différents ou identiques.

10. Procédé de traitement de données, appliqué à un processeur, dans lequel le processeur comprend un module de stockage de données, un module de stockage d'instructions, un module d'analyse d'instructions et une pluralité de modules logiques arithmétiques, dans lequel
le module de stockage de données stocke des données d'opération d'un algorithme de chiffrement ; le module de stockage d'instructions stocke un ensemble d'instructions d'opération de l'algorithme de chiffrement, un module logique arithmétique comprend au moins une unité logique arithmétique, et une unité logique arithmétique est configurée pour mettre en œuvre une opération d'un niveau de sécurité ; et le procédé comprend :
la lecture, par le module d'analyse d'instructions, d'une instruction d'opération de l'ensemble d'instructions d'opération stocké dans le module de stockage d'instructions, et l'analyse de l'instruction d'opération pour obtenir des informations d'analyse, dans lequel les informations d'analyse comprennent des informations de module, des informations de niveau de sécurité et des informations d'adresse ;
l'envoi, par le module d'analyse d'instructions sur la base des informations d'analyse, d'informations de commande correspondantes à un module logique arithmétique qui concorde avec les informations de module ; et
l'appel, sur la base des informations de commande par le module logique arithmétique qui concorde avec les informations de module, d'une unité logique arithmétique qui concorde avec les informations de niveau de sécurité, la réalisation d'une opération en utilisant des données d'opération qui concordent avec les informations d'adresse, pour obtenir un résultat d'opération correspondant à l'instruction d'opération, et le stockage du résultat d'opération dans le module de stockage de données.

11. Procédé selon la revendication 10, dans lequel l'ensemble d'instructions d'opération comprend une pluralité d'instructions d'opération, et les instructions d'opération sont agencées dans l'ensemble d'instructions d'opération selon une séquence d'opération d'une pluralité d'opérations correspondant à l'algorithme de chiffrement ; et
la lecture, par le module d'analyse d'instructions, d'une instruction d'opération de l'ensemble d'instructions d'opération stocké dans le module de stockage d'instructions comprend :
la lecture, par le module d'analyse d'instructions selon une séquence d'agencement des instructions d'opération dans l'ensemble d'instructions d'opération, d'une instruction d'opération de l'ensemble d'instructions d'opération stocké dans le module de stockage d'instructions ; et après qu'un résultat d'opération correspondant à l'instruction d'opération est stocké dans le module de stockage de données, la lecture, par le module d'analyse d'instructions selon la séquence d'agencement des instructions d'opération dans l'ensemble d'instructions d'opération, d'une instruction d'opération suivante de l'ensemble d'instructions d'opération stocké dans le module de stockage d'instructions.

12. Procédé selon la revendication 10, dans lequel les informations de commande comprennent un signal d'impulsion, un signal de niveau, et des données de commande ; et
l'envoi, par le module d'analyse d'instructions sur la base des informations d'analyse, d'informations de commande correspondantes à un module logique arithmétique qui concorde avec les informations de module comprend :
la génération, par le module d'analyse d'instructions, du signal d'impulsion sur la base des informations de module, et l'envoi du signal d'impulsion au module logique arithmétique qui correspond aux informations de module ;
la génération, par le module d'analyse d'instructions, du signal de niveau sur la base des informations de niveau de sécurité, et
l'envoi du signal de niveau au module logique arithmétique qui concorde avec les informations de module ; et
la génération, par le module d'analyse d'instructions, des données de commande sur la base des informations d'adresse, et l'envoi des données de commande au module logique arithmétique qui concorde avec les informations de module.

13. Procédé selon la revendication 12, dans lequel la génération, par le module d'analyse d'instructions, des données de commande sur la base des informations d'adresse comprend :
l'utilisation, par le module d'analyse d'instructions, des informations d'adresse comme données de commande.

14. Procédé selon la revendication 12, dans lequel les informations d'adresse comprennent des premières informations d'adresse de stockage des données d'opération, et la génération, par le module d'analyse d'instructions, des données de commande sur la base des informations d'adresse comprend :
l'obtention, par le module d'analyse d'instructions sur la base des premières informations d'adresse de stockage, des données d'opération correspondantes à partir du module de stockage de données ; et
la génération des données de commande sur la base des données d'opération obtenues.

15. Procédé selon la revendication 13, dans lequel les informations d'adresse comprennent des premières informations d'adresse de stockage des données d'opération et des secondes informations d'adresse de stockage du résultat d'opération ; l'appel, sur la base des informations de commande par le module logique arithmétique qui concorde avec les informations de module, d'une unité logique arithmétique qui concorde avec les informations de niveau de sécurité, la réalisation d'une opération en utilisant des données d'opération qui concordent avec les informations d'adresse, pour obtenir un résultat d'opération correspondant à l'instruction d'opération, et le stockage du résultat d'opération dans le module de stockage de données comprend :
le démarrage, par le module logique arithmétique qui concorde avec les informations de module sur la base du signal de niveau, d'une unité logique arithmétique qui concorde avec les informations de niveau de sécurité ; et la lecture, sur la base des premières informations d'adresse de stockage, de données d'opération concordantes du module de stockage de données, et l'entrée des données d'opération dans l'unité logique arithmétique qui concorde avec les informations de niveau de sécurité ;
la réalisation, par l'unité logique arithmétique qui concorde avec les informations de niveau de sécurité, **d'une** opération sur la base des données d'opération pour obtenir le résultat d'opération correspondant à l'instruction **d'opération,** et la livraison en sortie du résultat d'opération au module logique arithmétique qui concorde avec les informations de module ; et
le stockage, par le module logique arithmétique qui concorde avec les informations de module, du résultat d'opération dans le module de stockage de données sur la base des secondes informations d'adresse de stockage.
